# EUROPÄISCHE PATENTSCHRIFT

(11) **EP 4 512 631 B1**
(45) Veröffentlichungstag und Bekanntmachung des Hinweises auf die Patenterteilung: **14.10.2026**
(21) Anmeldenummer: 25151219.0
(22) Anmeldetag: 03.12.2010
(51) Int. Cl.: B42D 25/324, B42D 25/328, B42D 25/369, B42D 25/373, G02B 5/18

(54) **SICHERHEITSELEMENT, WERTDOKUMENT MIT EINEM SOLCHEN SICHERHEITSELEMENT SOWIE HERSTELLUNGSVERFAHREN EINES SICHERHEITSELEMENTES**
SECURITY ELEMENT, VALUABLE DOCUMENT HAVING SUCH A SECURITY ELEMENT, AND METHOD FOR PRODUCING A SECURITY ELEMENT
ÉLÉMENT DE SÉCURITÉ, DOCUMENT DE VALEUR DOTÉ D'UN TEL ÉLÉMENT DE SÉCURITÉ ET PROCÉDÉ DE FABRICATION D'UN ÉLÉMENT DE SÉCURITÉ

(30) Priorität: 04.12.2009 DE 102009056932; 04.10.2010 DE 102010047250
(43) Veröffentlichungstag der Anmeldung: 26.02.2025
(60) Teilanmeldung: 26152915.0 / 4 714 668
(62) Dokumentnummer(n) der früheren Anmeldung(en) nach Art. 76 EPÜ: 21020030.9 / 3 851 290; 17000520.1 / 3 216 620; 10790524.2 / 2 507 068
(73) Patentinhaber: Giesecke+Devrient Currency Technology GmbH, 81677 München (DE)
(72) Erfinder: Bichlmeier, Stefan, 85521 Riemerling (DE); Fuhse, Christian, 83624 Otterfing (DE); Heim, Manfred, 83646 Bad Tölz (DE); Rahm, Michael, 83646 Bad Tölz (DE); Rauch, Andreas, 82441 Ohlstadt (DE)
(74) Vertreter: Giesecke+Devrient IP

(56) Entgegenhaltungen:
- WO-A1-2008/104277
- WO-A1-98/53999
- CA-A1- 2 708 526
- DE-A1- 10 108 637
- DE-A1- 102005 061 749

## Beschreibung

Die vorliegende Erfindung betrifft ein Sicherheitselement für ein Sicherheitspapier, Wertdokument oder dergleichen, ein Wertdokument mit einem solchen Sicherheitselement sowie ein Verfahren zum Herstellen eines solchen Sicherheitselementes. Die Erfindung ist durch die Merkmale der beigefügten unabhängigen Ansprüche definiert. Die abhängigen Ansprüche betreffen vorteilhafte Ausgestaltungen der Erfindung.

Zu schützende Gegenstände werden häufig mit einem Sicherheitselement ausgestattet, das die Überprüfung der Echtheit des Gegenstandes erlaubt und zugleich als Schutz vor unerlaubter Reproduktion dient.

Zu schützende Gegenstände sind beispielsweise Sicherheitspapiere, Ausweis- und Wertdokumente (wie z.B. Banknoten, Chipkarten, Pässe, Identifikationskarten, Ausweiskarten, Aktien, Anlagen, Urkunden, Gutscheine, Schecks, Eintrittskarten, Kreditkarten, Gesundheitskarten, etc.) sowie Produktsicherungselemente, wie z.B. Etiketten, Siegel, Verpackungen, etc.

Für ein solches Sicherheitselement ist es bekannt, optisch variable Sicherheitsfarben zu verwenden, wie sie z.B. in der EP 0 227 423 A2 beschrieben sind. Solche Sicherheitsfarben enthalten plättchenförmige Pigmente mit einer Dünnfilm-Interferenzbeschichtung, so dass für einen Betrachter die Farbe der einzelnen Pigmente vom Betrachtungswinkel abhängt. Die Sicherheitsfarben mit den beschriebenen plättchenförmigen Pigmenten können so auf eine Banknote gedruckt werden, dass sich die Pigmente etwa parallel zur Oberfläche der Banknote ausrichten und die bedruckte Fläche beim Kippen der Banknote ihre Farbe entsprechend der Dünnfilm-Beschichtung der Pigmente ändert.

Es ist ferner bekannt, solche Pigmente mit einer zusätzlichen magnetischen Schicht zu versehen (US 4,838,648), so dass die Pigmente dann mittels geeigneter Magnete ausgerichtet und fixiert werden können (US 7,517,578 B2). Damit lassen sich einerseits die Pigmente wesentlich genauer parallel zueinander ausrichten, was zu einer deutlich höheren Chroma (= brillantere Farben) führt. Andererseits erhält man die Möglichkeit, die Pigmente nicht nur parallel zur Substratoberfläche, sondern im Prinzip in beliebiger Richtung zu orientieren. Insbesondere können die Pigmente verschiedener Bereiche des Sicherheitselementes auch in unterschiedlichen Richtungen ausgerichtet werden. Abhängig von der benutzten Magnetanordnung können zwischen den unterschiedlich orientierten Bereichen sowohl relativ abrupte wie auch weiche Übergänge erzielt werden.

Aus der JP 2008-80609 A ist ein weiteres Verfahren zur Ausrichtung der plättchenförmigen Pigmente bekannt, bei dem die Sicherheitsfarbe mit den Pigmenten auf einer geprägten Reliefstruktur so aufgebracht wird, dass sich die Pigmente etwa parallel zum Relief ausrichten. Durch entsprechende Ge-staltung des Reliefs lassen sich Bereiche mit unterschiedlich orientierten Pigmenten und entsprechend unterschiedlichen Farben realisieren.

Die beschriebenen optisch variablen Sicherheitsfarben sind einerseits relativ teuer. Andererseits ist die Ausrichtung der Pigmente über Magnete natürlich limitiert, da die zur Ausrichtung nötigen Magnetfelder nicht beliebig geformt werden können. Weiterhin können die Sicherheitselemente nicht besonders fein aufgelöst werden, was zum einen in den meist verwendeten Siebdruckverfahren und zum anderen in den nicht beliebig scharfen Übergängen der nötigen Magnetfelder begründet ist.

Neben der Farbänderung führen die Sicherheitsfarben auch häufig zu einem glitzernden Effekt ähnlich zu Metallic-Lackierung bei Kraftfahrzeugen.

WO 2008/104277 A1 betrifft ein Gitterbild mit zwei oder mehr Gitterfeldern, die jeweils ein elektromagnetische Strahlung beeinflussendes Gittermuster aus einer Vielzahl von Strichgitterlinien enthalten, wobei zumindest ein Gitterfeld ein achromatisches Gitterfeld mit einem betrachtungswinkelabhängigen visuellen Erscheinungsbild ist. DE 10 2005 061 749 A1 zeigt ein Sicherheitselement mit Mikrospiegelanordnung, wobei dunkle Bereiche durch zufällig ausgerichtete Mikrospiegel dargestellt werden können. DE 101 08 637 A1 betrifft eine optische Vorrichtung, die einen auftreffenden Lichtstrahl durch - an zufällig ausgewählten Positionen angeordnete - gerichtete Elemente auf eine Projektionsfläche so umlenkt, dass für den Betrachter der Projektionsfläche ein Motiv entsteht.

Davon ausgehend liegt der Erfindung die Aufgabe zugrunde, die Nachteile des Standes der Technik zu vermeiden und insbesondere, ein Sicherheitselement zur Verfügung zu stellen, mit dem zumindest einer der beschriebenen Effekte (wie z.B. der Bewegungseffekt) der Sicherheitsfarben ohne die Verwendung von Sicherheitsfarben erreicht werden kann.

Erfindungsgemäß wird die Aufgabe gelöst durch ein Sicherheitselement für ein Sicherheitspapier, Wertdokument oder dergleichen, mit einem Träger, der einen reflektiven Flächenbereich aufweist, der in eine Vielzahl von reflektiven Pixeln aufgeteilt ist, wobei die Fläche jedes Pixels um zumindest eine Größenordnung kleiner ist als die Fläche des reflektiven Flächenbereiches, wobei jedes Pixel zumindest eine reflektive Facette aufweist, die in einer Oberfläche des Trägers ausgebildet ist, wobei die zumindest eine reflektive Facette auf den Flächenbereich entlang einer vorbestimmten Richtung einfallendes Licht gerichtet in eine durch ihre Orientierung vorgegebene Reflexionsrichtung reflektiert, so dass das Sicherheitselement für einen Betrachter des Sicherheitselements einen Bewegungseffekt zeigt. Die Orientierungen der Facetten unterschiedlicher Pixel über den reflektiven Flächenbereich weisen eine im Wesentlichen zufällige Variation um bereichsweise vorgegebene unterschiedliche mittlere Orientierungen auf, die einer zufälligen Variation der Reflexionsrichtungen magnetisch orientierter Pigmente entspricht, so dass das Sicherheitselement einen mit magnetisch orientierten Pigmenten erzielbaren optischen Bewegungseffekt nachstellt. Die Facetten sind als gekrümmte Flächenstücke ausgebildet.

Unter "Pixeln" werden hier kleine Teilbereiche des reflektiven Flächenbereichs verstanden, die nicht nur eine beliebige Umrissform haben können, sondern insbesondere auch nicht auf einem regelmäßigen Raster angeordnet sein müssen.

Die gewählte Formulierung, nach der die Orientierungen der Facetten unterschiedlicher Pixel über den reflektiven Flächenbereich eine im Wesentlichen zufällige Variation aufweisen, trägt dabei der Tatsache Rechnung, dass eine zufällige Variation auch beispielsweise mithilfe computergenerierter "Zufallszahlen" realisiert werden kann, die streng genommen deterministisch sind.

Die im Wesentlichen zufällige Variation der Orientierungen der Facetten wird vorzugsweise so realisiert, dass den Pixeln z. B. bereichsweise zunächst eine gewisse Vorzugsorientierung zugeordnet wird, von der ausgehend die Orientierung der Facetten der einzelnen Pixel dann beispielsweise auf Basis computergenerierter Zufallszahlen oder Pseudo-Zufallszahlen variiert wird. Somit lässt sich insbesondere erreichen, dass die Orientierungen der Facetten einzelner Pixel um eine bereichsweise vorgegebene mittlere Orientierung schwanken. Die zufällige Schwankung der Orientierung kann in besonderen Ausführungsvarianten nur in vorgegebenen Grenzen und/oder entsprechend einer vorgegebenen Verteilung, beispielsweise normal- oder gleichverteilt, vorliegen.

Mit einem solchen Sicherheitselement ist es möglich, für jedes Pixel die Orientierung und damit auch die Richtung, in die einfallendes Licht reflektiert wird, genau einzustellen, so dass auf einfache Art und Weise ein Glitzereffekt verwirklicht werden kann. Bei dem erfindungsgemäßen Sicherheitselement kann somit die reflektive Fläche, die eine gekrümmte Fläche ist, immer noch als gekrümmte Fläche wahrgenommen werden, wobei sie aber den gewünschten Glitzereffekt zeigt.

Unter der im Wesentlichen zufälligen Variation der Orientierungen der Facetten über den reflektiven Flächenbereich wird hier insbesondere verstanden, dass für die Mehrzahl der Paare unmittelbar benachbarter Pixel oder auch für alle Paare unmittelbar benachbarter Pixel die Reflexionsrichtungen unterschiedlich sind. Bevorzugt ist dabei für einen Betrachter der Flächenbereich in seiner tatsächlichen Raumform wahrnehmbar.

Das erfindungsgemäße Sicherheitselement kann insbesondere ein optisches Erscheinungsbild aufweisen, das dem magnetisch ausgerichteter Pigmente optisch variabler Sicherheitsfarben praktisch gleicht. Dazu wählt man eine Pixelgröße, die etwa der Größe der in solchen Farben verwendeten Pigmente entspricht, beispielsweise 30 µm, und wählt die mittlere Orientierung der Facetten unterschiedlicher Pixel analog zur mittleren Orientierung der Pigmente. Der Glitzereffekt solcher Farben beruht darauf, dass die einzelnen Pigmente nicht exakt in eine vorgegebene Richtung reflektieren, sondern dass eine gewisse zufällige Variation der Reflexionsrichtungen vorliegt. Die Orientierungen der Facetten unterschiedlicher Pixel weisen beim erfindungsgemäßen Sicherheitselement ebenfalls eine solche Variation auf, woraus sich ein vergleichbarer Glitzereffekt ergibt.

Unter der Fläche des Flächenbereiches sowie der Fläche der Pixel wird hier insbesondere jeweils die Fläche bei Projektion in Richtung der makroskopischen Flächennormalen des Flächenbereiches auf eine Ebene verstanden. Bevorzugt ist die Fläche jedes Pixels um zumindest zwei Größenordnungen kleiner als die Fläche des reflektiven Flächenbereiches.

Bei dem erfindungsgemäßen Sicherheitselement weisen die Orientierungen der Facetten unterschiedlicher Pixel eine im Wesentlichen zufällige Variation um bereichsweise vorgegebene unterschiedliche mittlere Orientierungen auf.

Mehrere der Pixel weisen vorzugsweise jeweils mehrere reflektive Facetten gleicher Orientierung auf, die ein periodisches oder aperiodisches Sägezahngitter bilden. Es können auch alle Pixel jeweils mehrere, bevorzugt die gleiche Anzahl von reflektiven Facetten gleicher Orientierung aufweisen.

Die Facetten sind vorliegend als gekrümmte (z. B. konkav, konvex oder gewellt) Flächenstücke ausgebildet sein. Die Krümmung der Flächenstücke ist dabei zweckmäßig gering.

Unter Orientierung wird hier insbesondere die Neigung der reflektiven Facetten und/oder der Azimut-Winkel der reflektiven Facetten verstanden. Natürlich kann die Orientierung der Facetten auch durch andere Parameter bestimmt sein. Insbesondere handelt es sich dabei um zwei zueinander orthogonale Parameter, wie z. B. die zwei Komponenten des Normalenvektors der jeweiligen Facette.

Die zufällige Variation der Orientierungen kann dabei in einer oder zwei Dimensionen bzw. Raumrichtungen erfolgen. Das erfindungsgemäße Sicherheitselement kann insbesondere so ausgebildet sein, dass die Orientierungen der Facetten unterschiedlicher Pixel nur in einem der die Orientierung der Facetten bestimmenden Parameter eine im Wesentlichen zufällige Variation aufweisen. So kann die zufällige Variation insbesondere auch nur die Steigung oder nur den Azimutwinkel betreffen, oder die Variation der Orientierungen der Facetten kann so gewählt werden, dass ein in einem entsprechenden Teilbereich einfallender reflektierter Lichtstrahl um eine vorgegebene Drehrichtung "auffächert".

Vorzugsweise beträgt die durch die Variation der Orientierungen der Facetten unterschiedlicher Pixel vorgegebene Variation der Reflexionsrichtungen mindestens etwa 1°, bevorzugt mindestens etwa 3°, besonderes bevorzugt mindestens etwa 10°.

Bei dem erfindungsgemäßen Sicherheitselement können die reflektiven Facetten eine reflexionserhöhende, insbesondere eine reflektierende Beschichtung aufweisen. Reflexionserhöhende Beschichtungen im Sinne der Erfindung sind auch Beschichtungen, die den Reflexionsgrad beispielsweise nur von etwa 20% auf etwa 50% erhöhen, wie z.B. semitransparente Schichten, wohingegen bei reflektierenden Beschichtungen ein sehr hoher Reflexionsgrad vorliegt. Die reflexionserhöhende Beschichtung kann eine metallische Beschichtung sein, die beispielsweise aufgedampft ist. Als Beschichtungsmaterial kann insbesondere Aluminium, Gold, Silber, Kupfer, Palladium, Chrom, Nickel und/oder Wolfram sowie deren Legierungen verwendet werden. Alternativ kann die reflexionserhöhende Beschichtung durch eine Beschichtung mit einem Material mit hohem Brechungsindex gebildet werden.

Insbesondere kann auf den Facetten zumindest bereichsweise eine farbkippende Schicht ausgebildet sein. Damit ist die gewünschte farbkippende Wirkung auf Pixelgröße und somit hoch aufgelöst einstellbar. Gemäß einer vorteilhaften Ausgestaltung können auch bereichsweise unterschiedliche farbkippende Schichten auf den Facetten ausgebildet sein.

Sowohl die reflexionserhöhende Beschichtung als auch die farbkippende Schicht können in Form von Mustern, Zeichen oder Codierungen vorliegen und/oder Aussparungen in Form von Mustern, Zeichen oder Codierungen aufweisen.

Die maximale Ausdehnung eines Pixels liegt vorzugsweise zwischen etwa 5 µm und 5 mm, bevorzugt zwischen 10 µm und 300 µm, besonders bevorzugt zwischen 20µm und 100 µm.

Die Breite der Sägezähne bzw. im Fall periodischer Sägezahngitter die Gitterperiode pro Pixel liegt vorzugsweise zwischen 1 µm und 300 µm, bevorzugt zwischen 3 µm und 100 µm, besonders bevorzugt zwischen 5 µm und 30 µm. Die Breite der Sägezähne bzw. die Gitterperiode wird insbesondere so gewählt, dass pro Pixel zumindest zwei Facetten gleicher Orientierung enthalten sind und dass Beugungseffekte praktisch keine Rolle mehr spielen für einfallendes Licht (z.B. aus dem Wellenlängenbereich von 380 nm bis 750 nm). Da keine bzw. keine praktisch relevanten Beugungseffekte auftreten, können die Facetten als achromatische Facetten bzw. die Pixel als achromatische Pixel bezeichnet werden, die eine gerichtet achromatische Reflexion bewirken. Das Sicherheitselement weist somit bezüglich der durch die Facetten der Pixel vorhandenen Gitterstruktur eine achromatische Reflektivität auf, wobei das Sicherheitselement mit zunehmender Gitterperiode ein zunehmend brillanteres Erscheinungsbild, d. h. einen ausgeprägteren Gitzereffekt zeigt. Eine eventuell noch vorhandene Sichtbarkeit eines auf die Sägezahngitter zurückgehenden Beugungsbildes kann - sollte dies gewünscht sein - insbesondere durch eine Variation der Gitterperiode minimiert werden.

Die farbkippende Schicht kann insbesondere als Dünnschichtsystem bzw. Dünnfilm-Interferenzbeschichtung ausgebildet sein. Dabei kann z.B. eine Schichtfolge Metallschicht - dielektrische Schicht - Metallschicht oder eine Schichtfolge aus mindestens drei dielektrischen Schichten, wobei die Brechzahl der mittleren Schicht geringer ist als die Brechzahl der beiden anderen Schichten, verwirklicht werden. Als dielektrisches Material kann z.B. ZnS, SiO₂, TiO₂, MgF₂ verwendet werden.

Die farbkippende Schicht kann auch als Interferenzfilter, dünne semitransparente Metallschicht mit selektiver Transmission durch Plasmaresonanzeffekte, Nanopartikel, etc. ausgebildet sein. Die farbkippende Schicht kann insbesondere auch als Flüssigkristallschicht, diffraktive Reliefstruktur oder Sub-Wellenlängengitter realisiert sein. Auch ein Dünnfilmsystem mit einem Aufbau Reflektor, Dielektrikum, Absorber (in dieser Reihenfolge auf den Facetten ausgebildet bzw. bei Betrachtung des Sicherheitselements durch den Träger hindurch in der umgekehrten Reihenfolge) ist möglich. Soll das Sicherheitselement von beiden Seiten betrachtet werden können, bietet sich die Schichtfolge Absorber/ Dielektrikum/ Reflektor/ Dielektrikum / Absorber an.

Bei dem erfindungsgemäßen Sicherheitselement können pro Pixel bevorzugt zumindest zwei Facetten vorgesehen sein. Es können auch drei, vier, fünf oder mehr Facetten sein.

Das Sicherheitselement kann insbesondere so ausgebildet sein, dass die Azimut-Winkel der Facetten der einzelnen Pixel zufällig verteilte Werte zwischen 0° und 360° sind (aber pro Pixel weist jede Facette den gleichen Azimut-Winkel auf). Auch ist es möglich, dass die Steigungen der Facetten pro Pixel zufällig gemäß einer Normalverteilung verteilt sind (auch hier weist pro Pixel jede Facette die gleiche Steigung auf).

Der reflektive Flächenbereich des Sicherheitselementes kann in zumindest zwei Teilbereiche bzw. Abschnitte aufgeteilt sein, in denen die Pixel unterschiedliche mittlere Orientierungen bzw. durch die unterschiedlichen mittleren Orientierungen vorgegebene unterschiedliche mittlere Reflexionsrichtungen haben. So können z.B. alle Facetten den gleichen Azimut-Winkel aufweisen. In dem ersten der beiden Teilbereiche sind dann die Neigungen der Facetten beispielsweise zufällig zwischen 10° und 20° gewählt, während die Neigungen der Facetten im zweiten Teilbereich der beiden Teilbereiche zwischen -20° und -10° gewählt sind. Beim Kippen des Sicherheitselementes erscheint dann je nach Beleuchtung mal der erste und mal der zweite Teilbereich hell, d.h. die Darstellung "flippt" von einer positiven in eine negative Darstellung.

Alternativ können z.B. auch die Azimutwinkel über alle möglichen Winkel gleichverteilt sein und die Neigungen in den zwei Teilbereichen unterschiedlich, aber jeweils fest sein, beispielsweise 10° im ersten Teilbereich und 30° im zweiten Teilbereich. Eine solche Darstellung hat die besondere Eigenschaft, dass diese zwar beim Kippen des Sicherheitselements von einer positiven in eine negative Darstellung "flippt", beim Drehen des Sicherheitselements innerhalb seiner Ebene überraschenderweise aber ein solcher "Flip"-Effekt ausbleibt.

Wenn die Facetten eine farbkippende Schicht aufweisen, können die Farben der verschiedenen Teilbereiche unterschiedlich sein, da man unter verschiedenen Winkeln auf die farbkippende Beschichtung blickt.

Gemäß einer bevorzugten Ausgestaltung können die zwei Teilbereiche auch auf verschiedene, ineinander verschachtelte Teilflächen verteilt sein. Auf diese Weise lässt sich beispielsweise ein so genanntes Kippbild erzeugen.

Ferner kann bei dem erfindungsgemäßen Sicherheitselement der Eindruck erzeugt werden, dass eine "verrauschte" Fläche (bevorzugt in einer reflektiven Fläche) vorliegt. Zusätzlich können die Facetten der Pixel so orientiert sein, dass unter bestimmten Betrachtungswinkeln ein gleichzeitiges helles Aufleuchten vieler Pixel auftritt. Dazu wird der reflektive Flächenbereich auf dem Träger in zumindest zwei Teilbereiche aufgeteilt, so dass die Pixel im ersten Teilbereich eine zufällige Orientierung haben, während die Pixel des zweiten oder der weiteren Teilbereiche jeweils pro Teilbereich alle die gleiche bzw. zumindest nahezu gleiche Orientierung aufweisen. Das Licht einer Lichtquelle wird dann im ersten Teilbereich unter vielen Winkeln in alle Richtungen gestreut, während das Licht in den weiteren Teilbereich in jeweils in einen engen Winkelbereich reflektiert wird. Ein Betrachter sieht dann unter den meisten Winkeln nur eine verrauschte Darstellung mit zufällig aufleuchtenden Pixeln (Glitzereffekt), während unter bestimmten Winkeln die weiteren Teilbereiche sehr hell aufleuchten.

Mit dem erfindungsgemäßen Sicherheitselement wird grundsätzlich die Möglichkeit bereitgestellt, praktisch alle mit magnetisch orientierten Pigmenten erzielbaren optischen Effekte nachzustellen. So sind insbesondere die in der US 7,517,578 B2 genannten Effekte "Rolling Bar" oder "Double Rolling Bar" zu nennen. Zweckmäßig ist dabei die Orientierung der Facetten derart gewählt, dass der reflektive Flächenbereich einen kontinuierlichen Verlauf der mittleren Reflexionsrichtungen der Pixel aufweist. Durch eine geeignete Kombination des erfindungsgemäßen Sicherheitselements mit magnetischen Materialien, beispielsweise Einbringen magnetischer Schichten oder Kombination mit magnetischen Farben, können natürlich auch magnetische Eigenschaften bereitgestellt werden, die insbesondere maschinenlesbar sein können.

Bevorzugt werden die erzielbaren optischen Effekte auf dem Sicherheitselement periodisch fortgesetzt. So kann z. B. für ein als Sicherheitsfaden ausgebildetes Sicherheitselement eine Vielzahl derartiger Effekte periodisch wiederholt werden, so dass der entsprechende Effekt bei Anordnung in einem Fenster mehrfach wahrgenommen werden kann.

Die Pixel weisen bevorzugt eine rechteckige oder quadratische Umrissform auf. Sie können jedoch auch spezielle andere Umrissformen haben, die beispielsweise unter dem Mikroskop sichtbar werden. Insbesondere können die Pixel auch unterschiedliche Umrissformen aufweisen. So kann z.B. ein Teil der Pixel Umrisse in Form eines Symbols oder einer Zahl haben.

Vorzugsweise sind die Pixel in einem regelmäßigen Raster angeordnet.

In zumindest einem Teil der Pixel kann zusätzlich ein Motiv, z. B ein Mikrotext, ein Logo oder eine Codierung, eingeschrieben werden. Das Motiv kann dabei entweder in die Facetten geschrieben werden oder ein kleiner Teil der Pixel weist keine Facetten auf, sondern ist mit dem Motiv, z. B. einem Mikrotext gefüllt.

Das erfindungsgemäße Sicherheitselement lässt sich mit anderen bekannten Sicherheitsmerkmalen kombinieren. Beispielsweise ist eine verschachtelte Kombination mit einem Hologramm, insbesondere einem Echtfarbenhologramm oder einem Kinegramm möglich.

Gemäß einer bevorzugten Ausgestaltung kann das erfindungsgemäße Sicherheitselement mit einer mikrooptischen Darstellungsanordnung zu einer Gesamtdarstellung kombiniert werden. Beispielsweise kann das erfindungsgemäße Sicherheitselement mit einer mikrooptischen Darstellungsanordnung mit Mikrostrukturen sowie Mikroabbildungselementen zur vergrößerten Abbildung der Mikrostrukturen, z. B. Mikrolinsen- oder Mikrohohlspiegelarrays bzw. Mikrolinsen- oder Mikrohohlspiegelbildern, kombiniert werden.

Insbesondere ist es möglich, dass die Facetten durch Prägen der Oberfläche ausgebildet sind.

Der reflektive Flächenbereich des Sicherheitselementes kann insbesondere die Form eines Motivs (z.B. Buchstabe, Zahl, Symbol, etc.) aufweisen.

Das erfindungsgemäße Sicherheitselement kann weiter mit einer oder mehreren Funktionsschichten für den Einsatz als Sicherheitselement für Sicherheitspapiere, Wertdokumente und dergleichen ausgestattet werden, insbesondere mit einer Heißsiegelausstattung, mit Schutzschichten, z .B. einem transparenten Schutzlack, Deckschichten, Klebeschichten oder Schichten mit visuell und/oder maschinell erfassbaren Sicherheitsmerkmalen.

Es wird ferner bereitgestellt ein Wertdokument mit dem erfindungsgemäßen Sicherheitselement, wobei das Sicherheitselement gemäß den erfindungsgemäßen Weiterbildungen ausgebildet sein kann.

Neben der Nachstellung der mit magnetisch orientierten Pigmenten erzielbaren optischen Effekte können derartige Effekte auch gezielt mit dem erfindungsgemäßen Sicherheitselement kombiniert werden. So kann das Wertdokument gemäß einer vorteilhaften Ausgestaltung neben dem erfindungsgemäßen Sicherheitselement auch ein Sicherheitsmerkmal aufweisen, das auf magnetisch ausgerichteten, vorzugsweise plättchenförmigen Pigmenten optisch variabler Sicherheitsfarben basiert und das ein dem Erscheinungsbild des Sicherheitselements im Wesentlichen vergleichbares optisches Erscheinungsbild aufweist. Derartige Sicherheitsmerkmale können insbesondere der US 7,517,578 B2 entnommen werden, deren Offenbarung zur Herstellung und Eigenschaften solcher Sicherheitsmerkmale in die vorliegende Beschreibung aufgenommen wird. Die magnetischen Pigmente liegen dabei in der Regel in Form eines Motivs vor, das einen Bereich enthält, in dem die magnetischen Pigmente relativ zur Oberfläche der Farbschicht ausgerichtet sind.

Ein solches im Wesentlichen vergleichbares optisches Erscheinungsbild kann insbesondere darin bestehen, dass auf den Facetten des Sicherheitselements zumindest bereichsweise eine farbkippende Schicht ausgebildet ist und die farbkippende Wirkung der farbkippenden Schicht derart eingestellt ist, dass die Farbkippeffekte des Sicherheitselements und des auf magnetisch ausgerichteten Pigmenten basierenden Sicherheitsmerkmals zueinander korrespondieren, d. h. je nach Kippwinkel die gleiche Farbe aufweisen.

Alternativ oder zusätzlich können das erfindungsgemäße Sicherheitselement und das auf magnetisch ausgerichteten Pigmenten basierende Sicherheitsmerkmal jeweils einen weiteren optischen Effekt aufweisen, wobei die erzeugten weiteren optischen Effekte zueinander korrespondieren.

Vorzugsweise wird der weitere optische Effekt durch einen Bewegungseffekt gebildet. Insbesondere sind hier die in der US 7,517,578 B2 genannten Effekte "Rolling Bar" oder "Double Rolling Bar" zu nennen. Zweckmäßig erfolgen die Bewegungseffekte des Sicherheitselements und des auf magnetisch ausgerichteten Pigmenten basierenden Sicherheitsmerkmals beim Kippen des Wertdokuments in paralleler Richtung, in gegenläufiger Richtung (180°) oder in senkrechter Richtung zueinander.

Auch andere Bewegungseffekte beim Verkippen des Wertdokuments können verwirklicht werden, wie z. B. sogenannte Flip-, Lauf- oder Pumpeffekte. Die Bewegung erfolgt hier mit Vorteil gleichläufig oder gegenläufig. Zeigen das erfindungsgemäße Sicherheitselement und das auf magnetisch ausgerichteten Pigmenten basierende Sicherheitsmerkmal beim Kippen des Wertdokuments beispielsweise einen Pumpeffekt (konzentrische Bewegung um einen Fixpunkt), so zeigen daher entweder beide eine Ausdehnung oder beide eine Kontraktion (gleichläufige Bewegung) oder alternativ zeigt das Sicherheitselement einen Ausdehnungseffekt, während das auf magnetisch ausgerichteten Pigmenten basierende Sicherheitsmerkmal kontrahiert (gegenläufige Bewegung). Entsprechend "flippen" das Sicherheitselement und das auf magnetisch ausgerichteten Pigmenten basierende Sicherheitsmerkmal bei sogenannten Flipeffekten beim Kippen von einer positiven in eine negative Darstellung (gleichläufige Bewegung) oder nur das Sicherheitselement "flippt" auf diese Weise, während das auf magnetisch ausgerichteten Pigmenten basierende Sicherheitsmerkmal von einer negativen in eine positive Darstellung "flippt" (gegenläufige Bewegung).

Neben Bewegungseffekten können das erfindungsgemäße Sicherheitselement und das auf magnetisch ausgerichteten Pigmenten basierende Sicherheitsmerkmal auch einen korrespondierenden dreidimensionalen Effekt zeigen, wie er beispielsweise der US 7,517,578 B2 entnommen werden kann.

Das erfindungsgemäße Sicherheitselement und das auf magnetisch ausgerichteten Pigmenten basierende Sicherheitsmerkmal können entweder auf der gleichen Seite des Wertdokuments oder auf gegenüberliegenden Seiten des Wertdokuments angeordnet sein. Eine Anordnung auf gegenüberliegenden Seiten des Wertdokuments weist dabei den Vorteil auf, dass eventuell vorhandene minimale Farbabweichungen zwischen dem erfindungsgemäßen Sicherheitselement und dem auf magnetisch ausgerichteten Pigmenten basierenden Sicherheitsmerkmal nicht oder kaum wahrgenommen werden.

Gemäß einer Weiterbildung der Erfindung kann sowohl der reflektive Flächenbereich des Sicherheitselements als auch das auf magnetisch ausgerichteten Pigmenten basierende Sicherheitsmerkmal die Form eines übereinstimmenden Motivs (z.B. Buchstabe, Zahl, Symbol, etc.) aufweisen. Bevorzugt werden die Motive in unterschiedlicher Größe auf dem Wertdokument ausgebildet. Beispielsweise betragen die Abmessungen des Motivs des auf magnetisch ausgerichteten Pigmenten basierenden Sicherheitsmerkmals etwa 15 mm und die Abmessungen des Motivs des z. B. als Sicherheitsfaden ausgebildeten erfindungsgemäßen Sicherheitselements etwa 4 mm.

Die Erfindung umfasst auch ein Verfahren zum Herstellen eines Sicherheitselementes für Sicherheitspapiere, Wertdokumente oder dergleichen, bei dem die Oberfläche eines Trägers in einem Flächenbereich so höhenmoduliert wird, dass der Flächenbereich in eine Vielzahl von Pixeln mit jeweils zumindest einer Facette aufgeteilt wird, und die Facetten mit einer Beschichtung so versehen werden, dass reflektive Facetten gebildet werden, die auf den Flächenbereich entlang einer vorbestimmten Richtung einfallendes Licht pro Pixel jeweils gerichtet in eine durch ihre Orientierung vorgegebene Reflexionsrichtung reflektieren, so dass das Sicherheitselement für einen Betrachter des Sicherheitselements einen Bewegungseffekt zeigt. Die Fläche jedes Pixels wird um zumindest eine Größenordnung kleiner gewählt als die Fläche des Flächenbereiches. Die Orientierung der Facetten unterschiedlicher Pixel über den reflektiven Flächenbereich weist eine im Wesentlichen zufällige Variation um bereichsweise vorgegebene unterschiedliche mittlere Orientierungen auf, die einer zufälligen Variation der Reflexionsrichtungen magnetisch orientierter Pigmente entspricht, so dass das Sicherheitselement einen mit magnetisch orientierten Pigmenten erzielbaren optischen Bewegungseffekt nachstellt. Die Facetten sind als gekrümmte Flächenstücke ausgebildet.

Das Herstellungsverfahren kann insbesondere so weitergebildet werden, dass das erfindungsgemäße Sicherheitselement sowie die Weiterbildungen des erfindungsgemäßen Sicherheitselementes hergestellt werden können.

Zur Erzeugung der höhenmodulierten Oberfläche des Trägers können bekannte Mikrostrukturierungsverfahren verwendet werden, wie z.B. Prägeverfahren. So können beispielsweise auch mit aus der Halbleiterfertigung bekannten Verfahren (Photolithographie, Elektronenstrahllithographie, Laserstrahllithographie, etc.) geeignete Strukturen in Resistmaterialien belichtet, eventuell veredelt, abgeformt und zur Fertigung von Prägewerkzeugen verwendet werden. Es können bekannte Verfahren zur Prägung in thermoplastischen Folien oder in mit strahlungshärtenden Lacken beschichtete Folien eingesetzt werden. Der Träger kann mehrere Schichten aufweisen, die sukzessive aufgebracht und gegebenenfalls strukturiert und/oder kann aus mehreren Teilen zusammengesetzt werden.

Das erfindungsgemäße Sicherheitselement kann insbesondere so hergestellt werden, dass im gleichen Arbeitsschritt ein weiteres, geprägtes Sicherheitsmerkmal erzeugt wird. Dabei kann es sich insbesondere um ein optisch variables Sicherheitsmerkmal handeln, wie z.B. ein Hologramm, eine nichtverrauschte Sägezahnstruktur (Kippbilder, kinematische Effekte, 3D-Darstellungen, etc.), Mikrolinsen- oder Mikrohohlspiegelarrays bzw. Mikrolinsen- oder Mikrohohlspiegelbilder.

Ferner kann erfindungsgemäß das zumindest eine weitere Sicherheitsmerkmal im gleichen Arbeitsschritt wie die Facetten metallisiert bzw. mit einer metallischen Beschichtung versehen werden.

Das Sicherheitselement kann insbesondere als Sicherheitsfaden, Aufreißfaden, Sicherheitsband, Sicherheitsstreifen, Patch oder als Etikett zum Aufbringen auf ein Sicherheitspapier, Wertdokument oder dergleichen ausgebildet sein. Insbesondere kann das Sicherheitselement transparente Bereiche oder Ausnehmungen überspannen.

Unter dem Begriff Sicherheitspapier wird hier insbesondere die noch nicht umlauffähige Vorstufe zu einem Wertdokument verstanden, die neben dem erfindungsgemäßen Sicherheitselement beispielsweise auch weitere Echtheitsmerkmale (wie z.B. im Volumen vorgesehene Lumineszenzstoffe) aufweisen kann. Unter Wertdokumenten werden hier einerseits aus Sicherheitspapieren hergestellte Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsprüfung möglich ist und zugleich unerwünschtes Kopieren verhindert wird.

Es wird ferner bereitgestellt ein Prägewerkzeug mit einer Prägefläche, mit der die Form der Facetten eines erfindungsgemäßen Sicherheitselementes (einschließlich seiner Weiterbildungen) in den Träger bzw. in die Oberfläche des Trägers geprägt werden kann.

Die Prägefläche weist bevorzugt die invertierte Form der zu prägenden Oberflächenkontur auf, wobei diese invertierte Form bevorzugt durch die Ausbildung von entsprechenden Vertiefungen erzeugt ist.

In nicht erfindungsgemäßen Varianten kann ein Sicherheitselement als Master zur Belichtung von Volumenhologrammen oder zu rein dekorativen Zwecken benutzt werden.

Um das Volumenhologramm zu belichten, kann eine fotosensitive Schicht, in der das Volumenhologramm ausgebildet werden soll, unmittelbar oder unter Zwischenschaltung eines transparenten optischen Mediums in Kontakt mit der Vorderseite des Masters und somit mit der Vorderseite des Sicherheitselementes gebracht werden.

Dann werden die fotosensitive Schicht und der Master mit einem kohärenten Lichtstrahl belichtet, wodurch das Volumenhologramm in die fotosensitive Schicht geschrieben wird. Das Vorgehen kann gleich oder ähnlich zu dem in der DE 10 1006 016 139 A1 beschriebenen Vorgehen zur Erzeugung eines Volumenhologramms sein. Das grundsätzliche Vorgehen ist beispielsweise in den Abschnitten Nr. 70 bis 79 auf Seiten 7 und 8 der genannten Druckschrift in Verbindung mit Figuren 1a, 1b, 2a und 2b beschrieben. Hiermit wird der gesamte Inhalt der DE 10 2006 016 139 A1 in Bezug auf die Herstellung von Volumenhologrammen in die vorliegende Anmeldung aufgenommen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Figuren, die auch erfindungswesentliche Merkmale offenbaren, noch näher erläutert. Zur besseren Anschaulichkeit wird in den Figuren auf eine maßstabs- und proportionsgetreue Darstellung verzichtet. Es zeigen:
- Figur 1: eine Draufsicht einer Banknote mit einem erfindungsgemäßen Sicherheitselement 1;
- Figur 2: eine vergrößerte Draufsicht eines Teils des ersten Flächenbereiches 3 des Sicherheitselementes 1;
- Figur 3: eine Querschnittansicht entlang der Linie 7 in Figur 2;
- Figur 4: eine Querschnittsansicht entlang der Linie 10 in Figur 2;
- Figur 5: eine Querschnittsansicht entlang der Linie 11 in Figur 2;
- Figur 6: eine Querschnittsansicht zur Erläuterung der Ausbildung eines Colorshift-Dünnfilmsystems auf den Facetten;
- Figur 7: eine weitere Schnittansicht zur Erläuterung eines weiteren Colorshift-Dünnfilmsystems auf den Facetten;
- Figuren 8a-8c: Ansichten eines erfindungsgemäßen Sicherheitselementes gemäß einer weiteren Ausführungsform in verschiedenen Kippstellungen;
- Figuren 9a-9c: Ansichten eines erfindungsgemäßen Sicherheitselementes gemäß einer noch weiteren Ausführungsform in verschiedenen Kippstellungen, und
- Figur 10: eine Draufsicht einer weiteren Ausführungsform des erfindungsgemäßen Sicherheitselementes;
- Figur 11: eine schematische Schnittansicht des Sicherheitselementes von Figur 10;
- Figur 12: eine schematische Ansicht zur Erläuterung der Funktionsweise der mikrooptischen Darstellungsanordnung im zweiten Flächenbereich des erfindungsgemäßen Sicherheitselementes;
- Figur 13: eine schematische Schnittansicht einer weiteren Ausführungsform des erfindungsgemäßen Sicherheitselementes;
- Figur 14: eine Schnittansicht einer weiteren Ausführungsform des erfindungsgemäßen Sicherheitselementes;
- Figur 15: eine Schnittansicht einer weiteren Ausführungsform des erfindungsgemäßen Sicherheitselementes, und
- Figur 16: eine schematische Schnittansicht eines Prägewerkzeuges zur Herstellung des erfindungsgemäßen Sicherheitselementes gemäß Figur 11.

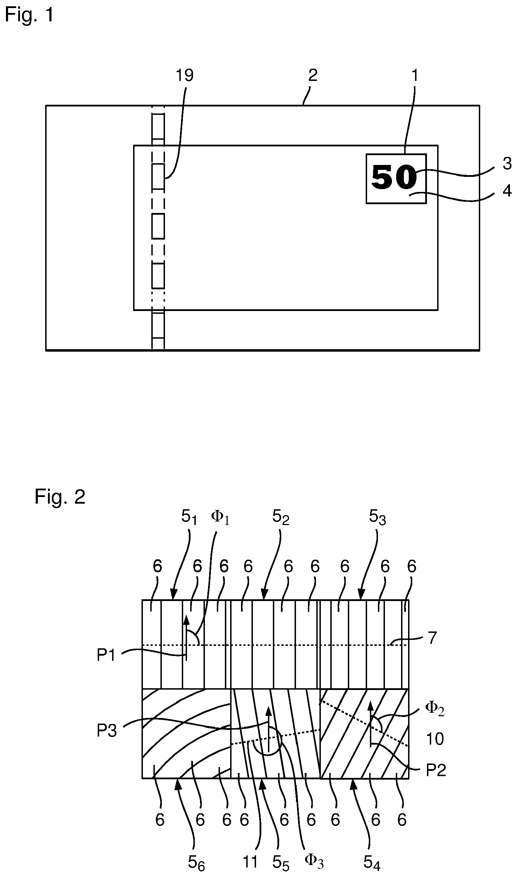

Bei der in Figur 1 gezeigten Ausführungsform ist das erfindungsgemäße Sicherheitselement 1 so in einer Banknote 2 integriert, dass das Sicherheitselement 1 von der in Figur 1 gezeigten Vorderseite der Banknote sichtbar ist.

Das Sicherheitselement 1, das als reflektives Sicherheitselement mit rechteckiger Außenkontur ausgebildet ist, umfasst einen ersten Flächenbereich 3 (hier die Ziffern der Zahl 50) sowie einen an den ersten Flächenbereich 3 anschließenden zweiten Flächenbereich 4, wobei beide Flächenbereiche 3 und 4 zusammen die gesamte Fläche ausfüllen, die durch die rechteckige Außenkontur begrenzt ist.

Der erste Flächenbereich 3 ist in eine Vielzahl von reflektiven Pixeln 5 aufgeteilt, von denen ein geringer Teil vergrößert in Figur 2 als Draufsicht dargestellt sind. Die Pixel 5 sind hier quadratisch und weisen eine Kantenlänge im Bereich von 10 bis mehrere 100 µm auf. Bevorzugt ist die Kantenlänge nicht größer als 300 µm. Insbesondere kann sie im Bereich zwischen 20 bis 100 µm liegen.

Die Kantenlänge der Pixel 5 ist so gewählt, dass die Fläche jedes Pixels 5 um zumindest zwei Größenordnungen kleiner ist als die Fläche des ersten Flächenbereiches 3 (Ziffern der Zahl 50).

Jedes Pixel 5 weist bei der hier beschriebenen Ausführungsform mehrere reflektive Facetten 6 mit gleicher Orientierung auf. Die Facetten 6 sind die geneigten Flächen eines reflektiven Sägezahngitters. In einer nicht dargestellten Abwandlung ist es jedoch auch möglich, dass mehrere oder alle Pixel 5 nur jeweils eine einzige Facette 6 aufweisen.

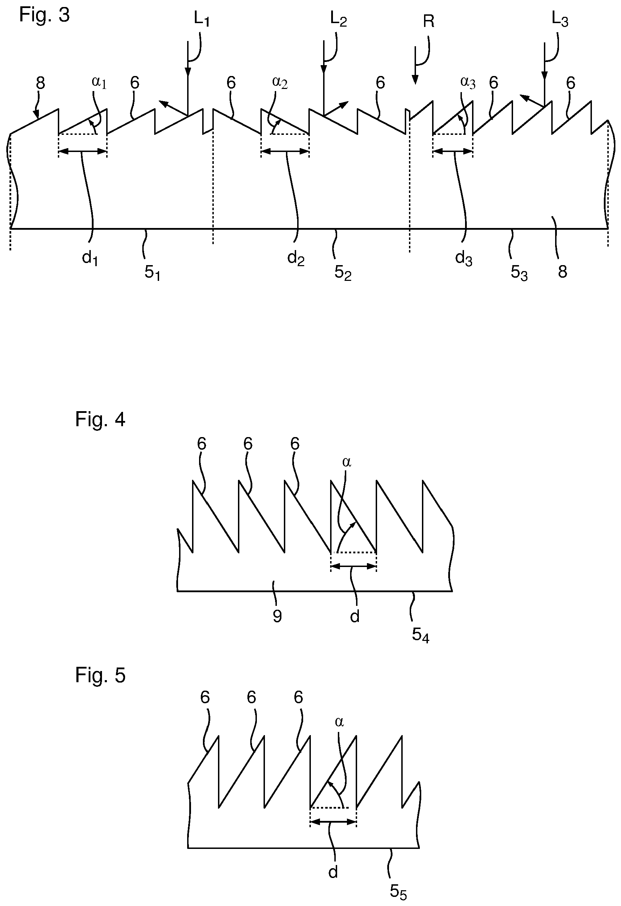

In Figur 3 ist die Schnittansicht entlang der Linie 7 für drei benachbarte Pixel 5₁, 5₂ und 5₃ dargestellt, wobei die Darstellung in Figur 3 sowie auch in den anderen Figuren nicht maßstabsgetreu ist, sondern teilweise zur besseren Darstellbarkeit stark übertrieben ist. Ferner ist zur Vereinfachung der Darstellung in Figur 3 sowie auch in Figuren 4 und 5 die reflektierende Beschichtung auf den Facetten 6 nicht eingezeichnet.

Das Sägezahngitter der Pixel 5₁, 5₂ und 5₃ ist in einer Oberseite 8 eines Trägers 9 ausgebildet, wobei die so strukturierte Oberseite bevorzugt mit einer reflektierenden Beschichtung beschichtet ist. Bei dem Träger 9 kann es sich z.B. um einen strahlungshärtenden Kunststoff (UV-Harz) handeln, der auf einer nicht gezeigten Trägerfolie (beispielsweise eine PET-Folie) aufgebracht ist.

Wie in Figur 3 ersichtlich ist, ist die Neigung α der Facetten 6 in jedem einzelnen Pixel 5₁, 5₂ und 5₃ gleich. Jedoch ist die Neigung von Facetten 6 benachbarter Pixel 5₁, 5₂, 5₃ verschieden. Darüber hinaus ist auch noch die Gitterperiode d₃ der Sägezahnstruktur des Pixels 5₃ verschieden von den Gitterperioden d₁ und d₂ der Sägezahnstrukturen der Pixel 5₁ und 5₂. Aufgrund der unterschiedlichen Orientierung der Facetten 6 der einzelnen Pixel 5₁, 5₂ und 5₃ wird entlang einer vorbestimmten Richtung R einfallendes Licht L₁, L₂, L₃ von jedem Pixel 5₁, 5₂, 5₃ gerichtet in unterschiedliche Reflexionsrichtungen reflektiert, wie schematisch in Figur 3 dargestellt ist. Da die Facetten 6 der Pixel 5 des ersten Flächenbereiches 3 stets unterschiedlich orientiert sind, wird für den Betrachter ein glitzernder Effekt bzw. ein Effekt vergleichbar mit einer Metallic-Lackierung erreicht.

Die unterschiedliche Orientierung der Facetten 6 kann nicht nur durch die Wahl des Neigungswinkels α der Facetten 6 eingestellt werden, sondern auch durch unterschiedliche Azimut-Winkel Φ. Bezogen auf die Richtung gemäß dem Pfeil P1 in Figur 2 beträgt der Azimut-Winkel Φ₁ der Facetten 6 der Pixel 5₁, 5₂ und 5₃ jeweils 90°.

Der Azimut-Winkel Φ₂ der Facetten 6 des Pixels 5₄ beträgt hingegen ca. 120° (bezogen auf die Richtung des Pfeils P2) und der Azimut-Winkel Φ₃ der Facetten des Pixels 5₅ beträgt ca. 280° (bezogen auf die Richtung des Pfeils P3). Die Schnittansichten entlang der Linien 10, 11 der Pixel 5₄ und 5₅ sind in Figuren 4 und 5 dargestellt.

Durch die so vorliegende unterschiedliche Orientierung der einzelnen Facetten 6 in den Pixeln 5 wird der bereits beschriebene Glitzereffekt bei Betrachtung des ersten Flächenbereiches 3 erzielt.

Der zweite Flächenbereich 4 kann als normal reflektierende ebene Fläche ausgebildet werden, so dass sich die Ziffern der Zahl 50 (erster Flächenbereich 3) aufgrund des beschriebenen Effekts deutlich von dem zweiten Flächenbereich 4 abheben.

Die Azimut-Winkel können beispielsweise für die einzelnen Pixel 5 zufällig gewählt werden. Insbesondere können zufällige Werte zwischen 0 und 360° ausgewählt werden. Für die Steigung α der Facetten 6 können beispielsweise Werte aus dem Bereich von 10° bis 20° sowie aus dem Bereich von -20° bis -10° gewählt werden. Es ist auch möglich, die Steigung der Facetten aus einem Bereich von beispielsweise -20° bis 20° zu wählen. Auch hier können wiederum die Steigungen zufällig gewählt sein.

Es ist möglich, dass die zufällig gewählte Steigung α einer Normalverteilung entspricht. Die zufällig gewählten Azimut-Winkel Φ können insbesondere gleich verteilt sein. Die Gitterperiode bzw. Breite der Sägezähne d liegt bevorzugt oberhalb von 1 µm und insbesondere oberhalb von 3 µm. Ferner kann die Gitterperiode d auch oberhalb von 5 µm liegen. Sie ist jedoch bevorzugt stets so gewählt, dass pro Pixel 5 zumindest zwei Facetten 6 vorliegen. Insbesondere können pro Pixel 5 zumindest drei, vier, oder mehr Facetten 6 enthalten sein.

Die Facetten 6 sind als gekrümmte Flächenstücke ausgebildet (z.B. konkav oder konvex). Es ist jedoch auch ein nicht geradliniger Verlauf (z.B. leicht gekrümmt) möglich, wie schematisch für das Pixel 5₆ in Figur 2 gezeigt ist.

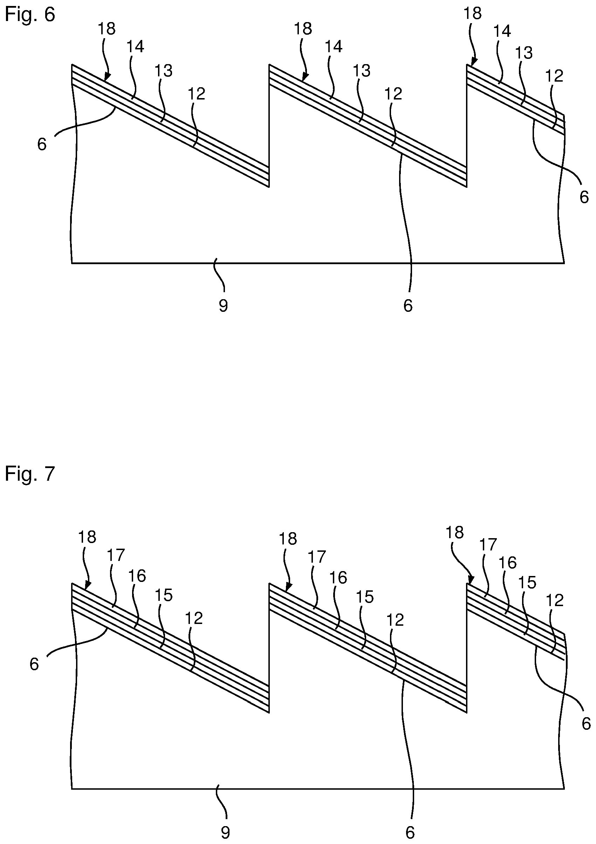

Des weiteren kann auf der Oberseite 8 bzw. auf der reflektierenden Beschichtung 12 auf der Oberseite 8 ein Colorshift-Dünnfilmsystem 18 bzw. ein Dünnfilmsystem 18 aufgedampft sein, wie in Figur 6 angedeutet ist. Die reflektierende Beschichtung 12 kann als Metallfilm ausgebildet sein, auf dem eine dielektrische Schicht 13 sowie eine obere Metallschicht 14, die teiltransparent ist, vorgesehen sind. Natürlich ist es auch möglich, auf dem Metallfilm 12 ein dielektrisches Dünnfilmsystem aus erster, zweiter und dritter Schicht 15, 16, 17 auszubilden, wobei die erste und dritte Schicht 15, 17 eine höhere Brechzahl aufweisen als die zweite Schicht 16 (Figur 7).

Mit einem solchen Aufbau können bekannte Sicherheitsfarben, bei denen plättchenförmige Pigmente mit einer Dünnfilm-Interferenzbeschichtung ihre Farbe abhängig vom Betrachtungswinkel ändern, ersetzt werden. Es wird ein vergleichbarer optischer Effekt erreicht, wobei die optisch wahrnehmbare Qualität deutlich besser ist im Vergleich zu Sicherheitsfarben. Es können mit dem erfindungsgemäßen Sicherheitselement deutlich brillantere Farben erzeugt werden.

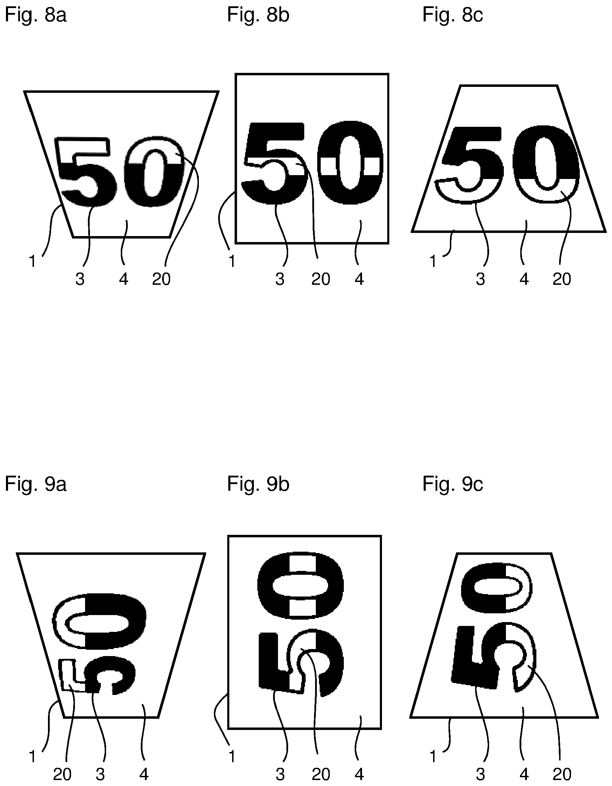

In Figur 8b ist eine Weiterbildung des erfindungsgemäßen Sicherheitselementes 1 gezeigt. Die Orientierung der Facetten 6 ist dabei so gewählt, dass sie im Bereich des weiß dargestellten mittleren Streifens nur einen relativ geringen Neigungswinkel jeweils aufweisen. Beispielsweise können Neigungswinkel aus dem Bereich von ± 5° gewählt werden. Je weiter die Facetten 6 von der Mitte entfernt sind, desto größer wird der mittlere Neigungswinkel, wobei die Neigungswinkel in Richtung nach oben in Figur 8b kontinuierlich zunehmen und in der Richtung nach unten in Figur 8b kontinuierlich abnehmen. Anders gesagt, verschieben sich die Grenzen des Bereiches, aus denen die Neigungswinkel gewählt werden können, mit zunehmendem Abstand von der Mitte zu größeren Neigungswinkeln. Die Azimut-Winkel werden dabei jeweils aus einem solchen Bereich gewählt, dass der mittlere Reflexionswinkel im oberen Bereich nach oben und im unteren Bereich nach unten ist.

Wenn man senkrecht auf das in Figur 8b gezeigte Sicherheitselement 1 bei senkrechter Beleuchtung blickt, erscheinen die Ziffern der Zahl 50 im Bereich des mittleren Streifens 20 heller als in den anderen Bereichen, was durch die weiße Darstellung angedeutet ist. Natürlich tritt auch der beschriebene glitzernde Effekt noch auf, da die Pixel immer noch unterschiedliche Reflexionsrichtungen (hier innerhalb der beschriebenen Grenzen) aufweisen.

Wenn man nun das Sicherheitselement 1 kippt, rollt der Streifen 20 während des Kippens scheinbar nach oben oder unten. In Figur 8a ist eine Kippstellung gezeigt, bei der der untere Bereich des Sicherheitselementes 1 in die Blattebene hinein und somit der obere Teil des Sicherheitselementes 1 aus der Blattebene heraus gekippt ist. In diesem Fall ist der Streifen 20 scheinbar nach oben gewandert. In Figur 8c ist die entgegengesetzte Kippung gezeigt, bei der der obere Teil in die Blattebene hinein und der untere Teil des Sicherheitselementes aus der Blattebene heraus gekippt ist. In diesem Fall ist der Streifen 20 scheinbar nach unten gewandert. Ein solcher Effekt wird auch als "Rolling Bar" bezeichnet.

Insbesondere bei Ausbildung des Sicherheitselements 1 als Sicherheitsfaden 19 (Figur 1) bieten sich Anordnungen an, bei denen nicht nur einzelne beim Kippen wandernde Streifen 20 vorliegen, sondern der Effekt periodisch fortgesetzt wird. So kann beispielsweise für einen Sicherheitsfaden 19, der an bestimmten Fensterbereichen an der Oberfläche der Banknote 2 hervortritt, eine Vielzahl derartiger Effekte auf z. B. 5 mm Rapport periodisch wiederholt werden. In einen Fensterbereich mit z. B. 10 mm Höhe kann der Effekt daher immer mindestens zweimal wahrgenommen werden, d.h. es sind immer mindestens zwei helle Streifen 20 zu sehen.

Natürlich ist es auch möglich, die mittlere Orientierung der Facetten der einzelnen Pixel so vorzugeben, dass bei einem Kippen des Sicherheitselementes 1 ein sich senkrecht zur Kippachse erstreckender Balken entlang der Kippachse bewegt. Dieser Fall ist in Figur 9a bis 9c angedeutet. In Figur 9b ist das Erscheinungsbild des Sicherheitselementes 1 bei senkrechter Betrachtung und Beleuchtung dargestellt. Es ist ein mittlerer Streifen 20 vorhanden, der bei dieser Kippstellung heller erscheint als die restlichen Bereiche des ersten Flächenbereiches 3 und der sich hier senkrecht erstreckt.

Wenn nun das Sicherheitselement 1 gekippt wird (Figur 9a zeigt die Kippung, bei der die untere Seite in die Blattebene hinein, und Figur 9c zeigt die Kippung, bei der die untere Seite aus der Blattebene herausgekippt ist), wandert der senkrechte Balken 20 scheinbar von links nach rechts.

Die mittlere Neigung im Bereich des Streifens 20 ist bei der Stellung von Figur 9b relativ gering und steigt nach rechts und links jeweils kontinuierlich an. Die Azimut-Winkel sind dabei so gewählt, dass die Facetten im linken Bereich beispielsweise nach oben und im rechten Bereich beispielsweise nach unten ausgerichtet sind. Damit kann der beschriebene Effekt erreicht werden, wobei auch hier wiederum der glitzernde Eindruck aufgrund der zufälligen Variation der Orientierung der Facetten unterschiedlicher Pixel erreicht wird, wenn auch nur pro Bereich ein gewisser schmaler Variationsbereich vorgegeben ist.

Gemäß einer hier nicht gezeigten Ausgestaltung kann das Sicherheitselement 1 auf einer Banknote 2 angeordnet sein, die ferner ein Sicherheitsmerkmal enthält, das auf vorzugsweise plättchenförmigen magnetischen Pigmenten basiert, die relativ zur Oberfläche der Banknote derart ausgerichtet sind, dass sie einen sogenannten "Rolling Bar"-Effekt zeigen. Derartige Ausrichtungen können insbesondere der US 7,517,578 B2 entnommen werden. Das Sicherheitselement 1 und das magnetische Sicherheitsmerkmal sind dabei derart zueinander angeordnet, dass der helle Streifen des Sicherheitselements 1 und der helle Streifen des magnetischen Sicherheitsmerkmals beim Kippen der Banknote 2 in senkrecht zueinander stehende Richtungen wandern.

Neben dem beschriebenen, sich bewegenden Streifen beim Kippen des Sicherheitselementes, können natürlich auch andere bekannte Bewegungseffekte beim Verkippen des Sicherheitselementes 1 verwirklicht werden, wie z.B. sogenannte Flip-, Lauf- oder Pumpeffekte.

Einige der oben beschriebenen Effekte sind mit herkömmlich bekannten Pigmentfarben gar nicht oder zumindest nur sehr schwer zu realisieren.

Das erfindungsgemäße Sicherheitselement kann dadurch hergestellt werden, dass zunächst der erste Flächenbereich 3 rechnerisch in die Pixel 5 aufgeteilt wird. Dann wird für jedes Pixel 5 rechnerisch eine gewünschte Orientierung vorgegeben. Diese kann z.B. der mittleren zu erwartenden Orientierung eines Pigments bekannter Sicherheitsfarben entsprechen. Insbesondere kann eine Gitterperiode bzw. die Breite der Sägezähne d vorgegeben werden. Die im Wesentlichen zufällige Variation der Orientierungen der Facetten 6 wird dann vorzugsweise so realisiert, dass ausgehend von einer solchen Vorzugsorientierung die Orientierung der Facetten 6 der einzelnen Pixel 5 dann beispielsweise auf Basis computergenerierter Zufallszahlen oder Pseudo-Zufallszahlen variiert wird. Somit lässt sich insbesondere erreichen, dass die Orientierungen der Facetten 6 einzelner Pixel 5 um eine vorgegebene mittlere Orientierung schwanken. Die zufälligen Variationen der Orientierung können in einer oder zwei Dimensionen bzw. Raumrichtungen erfolgen. So kann die Variation insbesondere auch nur die Steigung α oder nur den Azimutwinkel Φ betreffen, oder die Variation der Orientierungen der Facetten 6 kann so gewählt werden, dass ein in einem entsprechenden Teilbereich einfallender reflektierter Lichtstrahl um eine vorgegebene Drehrichtung auffächert. Aufgrund dieser Daten können dann die Sägezahnstrukturen der einzelnen Pixel 5 beispielsweise mittels Graustufenlithographie erzeugt werden. Diese Struktur kann dann galvanisch abgeformt und in Massenproduktion auf Folie in UV-Lack 9 geprägt werden. Anschließend wird der Metallfilm 12 aufgedampft und dann gegebenenfalls die Dünnfilm-Interferenzbeschichtung 18.

Bei dem erfindungsgemäßen Sicherheitselement 1 können die Orientierungen der Facetten 6 der Pixel 5 mit hoher Genauigkeit hergestellt werden, so dass auf der kleinen Längenskala der Pixel 5 eine sehr feine Auflösung erreicht werden kann. Insbesondere können beliebig scharfe oder weiche Übergänge durch die einzelnen Pixel 5 erzeugt werden. Es kann für jede Facette 6 die Orientierung in der beschriebenen Art und Weise festgelegt werden und nach dieser Festlegung kann dann das Sicherheitselement 1 hergestellt werden.

Das erfindungsgemäße Sicherheitselement 1 kann auch als Sicherheitsfaden 19 (Figur 1) ausgebildet sein. Ferner kann das Sicherheitselement 1 nicht nur, wie beschrieben, auf einer Trägerfolie ausgebildet werden, von der es in bekannter Weise auf das Wertdokument übertragen werden kann. Es ist auch möglich, das Sicherheitselement 1 direkt auf dem Wertdokument auszubilden. So kann ein direkter Druck mit anschließender Prägung des Sicherheitselementes auf ein Polymersubstrat durchgeführt werden, um beispielsweise bei Kunststoffbanknoten ein erfindungsgemäßes Sicherheitselement auszubilden. Das erfindungsgemäße Sicherheitselement kann in verschiedensten Substraten ausgebildet werden. Insbesondere kann es in oder auf einem Papiersubstrat, einem Papier mit Synthesefasern, d.h. Papier mit einem Anteil x polymeren Materials im Bereich von 0 < x < 100 Gew.-%, einer Kunststofffolie, z. B. einer Folie aus Polyethylen (PE), Polyethylenterephthalat (PET), Polybutylenterephthalat (PBT), Polyethylennaphthalat (PEN), Polypropylen (PP) oder Polyamid (PA), oder einem mehrschichtigem Verbund, insbesondere einem Verbund mehrerer unterschiedlicher Folien (Kompositverbund) oder einem Papier-Folien-Verbund (Folie/Papier/Folie oder Papier/Folie/Papier), wobei das Sicherheitselement in oder auf oder zwischen jeder der Schichten eines solchen mehrschichtigen Verbunds vorgesehen werden kann, ausgebildet werden.

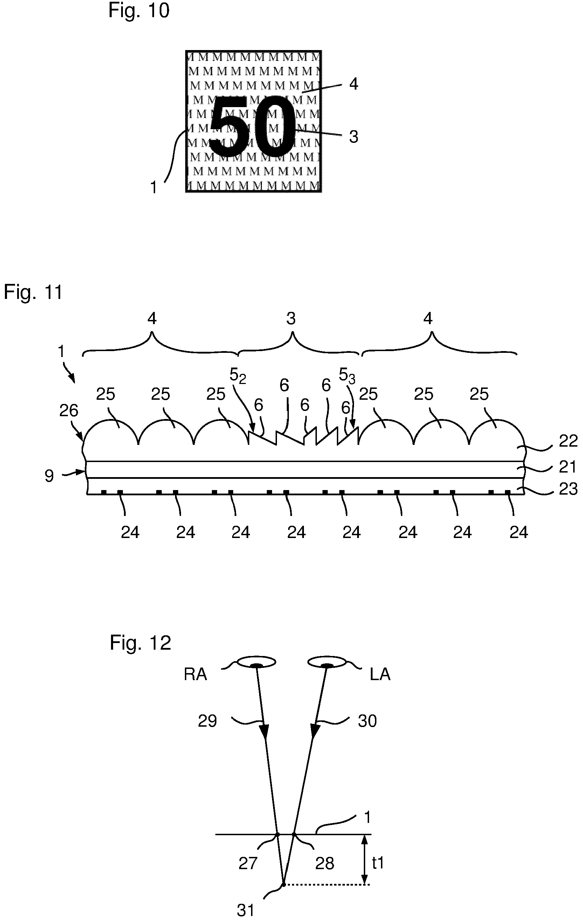

In Fig. 10 ist in Draufsicht eine weitere Ausführungsform des erfindungsgemäßen Sicherheitselementes 1 gezeigt, bei dem der erste Flächenbereich 3 wiederum durch die Ziffern der Zahl 50 gebildet ist und der zweite Flächenbereich 4 so an den ersten Flächenbereich 3 anschließt, dass beide Flächenbereiche 3 und 4 zusammen die gesamte Fläche ausfüllen, die durch die rechteckige Außenkontur des optisch variablen Flächenmusters 1 begrenzt ist. Der erste Bereich 3 kann in den in Verbindung mit Figuren 1 bis 9 beschriebenen Arten ausgebildet sein, so dass zum Beispiel der erfindungsgemäße glitzernde Effekt und/oder die beschriebene verrauschte Darstellung erzielt werden kann. Insbesondere kann der in Verbindung mit Figuren 8a-8c beschriebene "Rolling Bar-Effekt" bereitgestellt werden.

Der zweite Flächenbereich 4 ist hier als Moiré-Vergrößerungsanordnung, die nachfolgend noch im Detail beschrieben wird, ausgebildet, die den Buchstaben "M" für den Betrachter mit einer absoluten Tiefeninformation darstellt. Dadurch ergibt sich für den Betrachter eine Gesamtdarstellung, in der die beiden Flächenbereiche 3, 4 bzw. die durch die Flächenbereiche 3 und 4 dargebotenen Einzeldarstellungen ein Gesamtbild ergeben, wobei die beiden Flächenbereiche 3, 4 bevorzugt direkt aneinander grenzen.

In vorteilhafter Weise können die beiden Flächenbereiche auf demselben Träger 9 (der z. B. als Folienstreifen ausgebildet sein kann) kombiniert und insbesondere in gleichen Arbeitsgängen geprägt werden.

In Fig. 11 ist eine schematische Schnittansicht des Sicherheitselementes 1 gemäß Figur 10 dargestellt, wobei die Schnittansicht einen Abschnitt des ersten Flächenbereiches 3 zeigt, an den beidseitig der zweite Flächenbereich 4 anschließt. Die Schnittansicht gemäß Figur 11 ist rein schematisch und nicht maßstabsgetreu und dient im Wesentlichen zur Erläuterung des Aufbaus.

Wie der Schnittansicht gemäß Figur 11 zu entnehmen ist, weist der Träger 9 eine Trägerfolie 21 (die beispielsweise eine PET-Folie sein kann) sowie eine obere und untere Prägelackschicht 22, 23 auf.

Im Bereich des ersten Flächenbereiches 3 sind schematisch Facetten 6 der Pixel 5₂ und 5₃ dargestellt. Mittels der Facetten 6 wird die gewünschte Reflexion der einzelnen Pixel 5₂, 5₃ erreicht.

Um im zweiten Flächenbereich 4 den Buchstaben "M" mit der gewünschten absoluten Tiefeninformation darzubieten, sind in der unteren Prägelackschicht 23 Mikrostrukturen 24, die insbesondere mit Farbe gefüllt sein können, gebildet. Die Mikrostrukturen 24 sind in einer Ebene senkrecht zur Zeichenebene von Figur 11 in einem Raster mit fester Geometrie (hier beispielsweise ein hexagonales Raster) und somit flächig in einem ersten Mikrostrukturmuster angeordnet.

Die obere Prägelackschicht 22 ist so ausgebildet, dass sie im zweiten Flächenbereich 4 eine Vielzahl von Mikrolinsen 25 aufweist. Die Mikrolinsen 25 sind in einer Ebene senkrecht zur Zeichenebene von Figur 11 in einem Raster mit fester Geometrie (hier beispielsweise ein hexagonales Raster) und somit flächig in einem ersten Muster angeordnet, wobei das erste Muster so an das erste Mikrostrukturmuster angepasst und beide Muster so zueinander ausgerichtet sind, dass bei Betrachtung des Sicherheitselementes 1 die Mikrolinsen 25 zusammen mit den Mikrostrukturen 24 eine Moiré-Vergrößerungsanordnung bilden. Das Grundprinzip einer Moiré-Vergrößerungsanordnung ist beispielsweise in der WO 2006/ 087138 A1 beschrieben, deren gesamter Inhalt hiermit aufgenommen wird.

Die Moiré-Vergrößerungsanordnung im zweiten Flächenteil 4 bildet eine mikrooptische Darstellungsanordnung 26, mit der hier, wie nachfolgend noch im Detail beschrieben wird, mehrfach der Buchstabe "M" dem Betrachter so dargestellt wird, dass er hinter dem Sicherheitselement 1 erscheint. Dies wird dadurch erreicht, dass dem linken und rechten Auge LA und RA des Betrachters unterschiedliche Ansichten des darzustellenden Objektes (hier der Buchstabe "M") dargeboten werden, die das Objekt jeweils aus der entsprechenden Richtung betrachtet zeigen. In Figur 12 ist das Objekt zur Vereinfachung der Darstellung als Punkt eingezeichnet, wobei das rechte Auge RA des Betrachters das Objekt an der Position 27 sieht und das linke Auge LA des Betrachters das Objekt an der Position 28 sieht. Somit sieht der Betrachter mit seinen beiden Augen das Objekt unter den unterschiedlichen Richtungen 29, 30, die sich an der Position 31 schneiden, so dass sich für den Betrachter das Objekt an der Position 31 und daher im Abstand t1 hinter dem Sicherheitselement 1 befindet. Für den Betrachter ergibt sich somit für das Objekt eine absolute Tiefeninformation.

Mit dem zweiten Flächenbereich 4 wird somit z. B. bei konstantem Betrachtungswinkel eine von der Beleuchtungsrichtung unabhängige Darstellung erreicht, während im ersten Flächenbereich 3 z. B. der glitzernde Effekt bei variierender Beleuchtungsrichtung auftritt.

Durch die Moiré-Vergrößerungsanordnung im zweiten Flächenbereich 4 wird ein absoluter Tiefeneffekt erreicht, bei dem für den Betrachter der in der Tiefe t1 liegende, periodisch wiederkehrende Buchstabe "M" dargestellt wird. Die Mikrostrukturen 24 können, wie bereits erwähnt, bevorzugt mit Farbe gefüllt sein, so dass die Buchstaben "M" einerseits und der restliche Bereich des zweiten Flächenbereiches 4 andererseits matt, aber unterschiedlich farbig erscheinen.

Die mikrooptische Darstellungsanordnung 26 kann nicht nur als Moire-Vergrößerungsanordnung ausgebildet sein, sondern beispielsweise auch als Modulo-Vergrößerungsanordnung, wie sie z.B. in der WO 2009/000528 A1 beschrieben ist. Der Inhalt bezüglich der Ausbildung einer Modulo-Vergrößerungsanordnung der WO 2009/000528 A1 wird hiermit in die vorliegende Anmeldung aufgenommen. Mit einer Modulo-Vergrößerungsanordnung muss im Gegensatz zu einer Moiré-Vergrößerungsanordnung das darzustellende Bild sich nicht zwangsläufig aus einem Gitter periodisch wiederholender Einzelmotive zusammensetzen. Es kann ein komplexes Einzelbild mit hoher Auflösung dargestellt werden. Bei der Moiré-Vergrößerungsanordnung besteht das darzustellende Bild in der Regel aus Einzelmotiven (hier Mikrostrukturen 24), die in einem Gitter periodisch angeordnet sind und die durch die Linsen 25 vergrößert dargestellt werden, wobei die jedem Einzelmotiv zugeordnete Fläche maximal etwa der Fläche der entsprechenden Linsenzelle entspricht.

Bei der beschriebenen Ausführungsform können die Mikrolinsen 25 sowie die Sägezahnstrukturen für die reflektiven Facetten 6 mittels nur einer einzigen Prägung der Prägeschicht 22 gleichzeitig nebeneinander hergestellt werden. Anschließend sind lediglich die Facetten 6 zu metallisieren, damit sie reflektiv wirken. Der Aufbau gemäß Figur 11 ist daher schnell herzustellen.

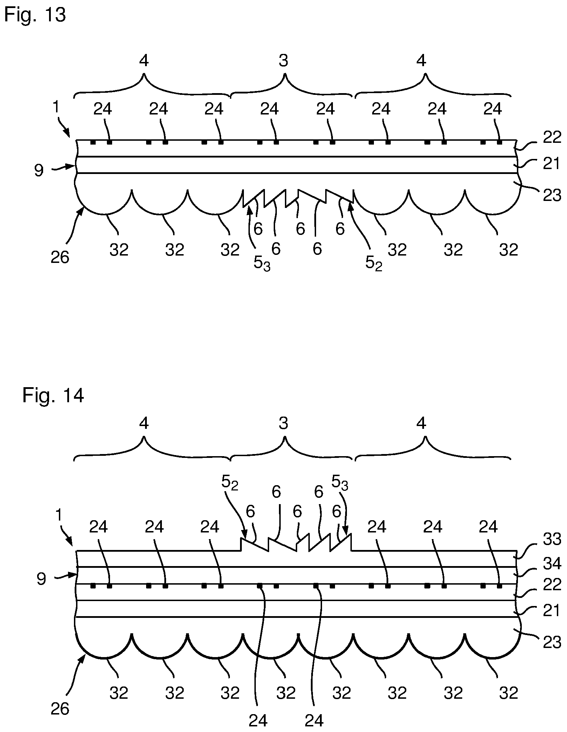

In Figur 13 ist eine Abwandlung des erfindungsgemäßen Sicherheitselementes 1 gezeigt, bei der die mikrooptische Darstellungsanordnung 26 statt der Mikrolinsen 25 Hohlspiegel 32 aufweist, die durch Prägen der unteren Prägelackschicht 23 und Aufbringen einer spiegelnden Beschichtung gebildet sind.

Auch die Facetten 6 der Pixel 5₂, 5₃ sind auf der unteren Prägelackschicht 23 ausgebildet. Sie können in gleicher Weise wie die Mikrohohlspiegel 32 durch Prägen und Verspiegeln gebildet sein. Bevorzugt werden die Mikrohohlspiegel 32 und die Facetten im gleichen Schritt geprägt und im gleichen Schritt verspiegelt.

Die Mikrostrukturen 24 können nicht nur im zweiten Flächenbereich 4, sondern auch im ersten Flächenbereich 3 und somit oberhalb der Facetten 6 vorgesehen sein. Dies erleichtert die Herstellung des Sicherheitselementes 1. Sie können jedoch auch weggelassen werden.

Falls die Mikrostrukturen 24 im ersten Flächenbereich 3 vorgesehen und mit einer Farbe gefüllt sind, kann (muss aber nicht) der erste Flächenbereich 3 ebenfalls leicht farbig erscheinen.

In Figur 14 ist ein Aufbau des Sicherheitselementes 1 gezeigt, bei dem die Mikrohohlspiegel 32, die Mikrostrukturen 24 und die Facetten 6 jeweils für sich in einer eigenen Prägelackschicht 23, 22 und 33 geprägt sind. Zwischen den Prägelackschichten 23 und 22 ist eine erste Trägerfolie 21 und zwischen den Prägelackschichten 22 und 33 ist eine zweite Trägerfolie 34 vorgesehen.

Dieser Aufbau erfordert zwar mehr Arbeitsschritte zur Herstellung im Vergleich zu den Varianten gemäß Figuren 11 und 13, bietet jedoch den Vorteil, dass die Origination der Mikrohohlspiegel 32 und der Facetten 6 getrennt voneinander erfolgen kann. Das Original der Mikrohohlspiegel 32 kann sogar bei unterschiedlichen Designs dasselbe sein, da immer nur eine homogene, mit Mikrohohlspiegeln 32 bedeckte Fläche benötigt wird. Hat man einmal ein Original mit sehr guten Abbildungseigenschaften hergestellt, kann man es für die Herstellung vieler verschiedener Sicherheitselemente 1 nutzen. Ferner können die Mikrohohlspiegel 32 und die Facetten 6 unterschiedlich metallisiert sein, beispielsweise mit unterschiedlichen Metallen oder Beschichtungen mit farbkippenden Effekten (z.B. Dünnschichtsysteme, bei denen die Farbe in Abhängigkeit des Betrachtungswinkels variiert).

Bei den Varianten gemäß Figuren 13 und 14 mit den Mikrohohlspiegeln 32 kann ferner vorteilhaft auf der Oberseite oder Unterseite des Sicherheitselementes 1 eine weitere Schutzlackschicht (nicht gezeigt) vorgesehen sein, so dass die Beständigkeit sowie der Schutz vor Abformungen durch Fälscher erhöht werden kann.

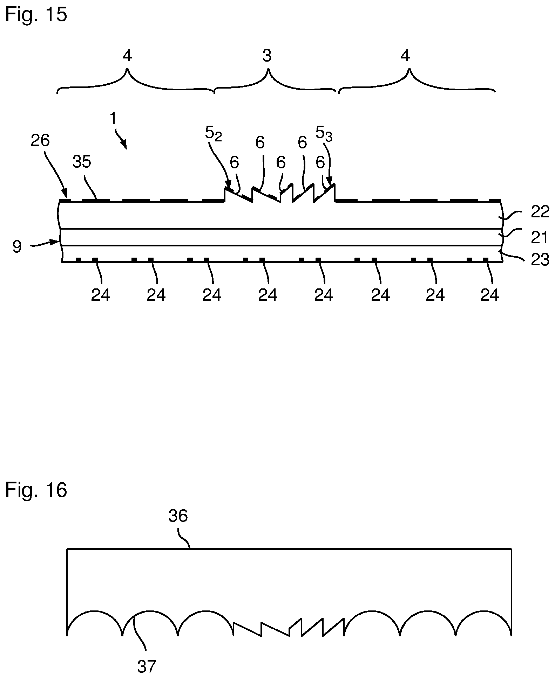

Insbesondere bei der Betrachtung des Sicherheitselementes 1 in Durchlicht vor einer hellen Lichtquelle kann die mikrooptische Darstellungsanordnung 26 statt eines Mikrofokussierelementrasters (Raster aus den Mikrolinsen 25 oder Raster aus den Mikrohohlspiegeln 32) auch lediglich ein Lochraster 35 aufweisen, wie in Figur 15 gezeigt ist. Ein solches Lochraster 35 kann beispielsweise durch periodisch angeordnete Löcher oder Schlitze in einer opaken, beispielweise spiegelnd metallisierten Schicht realisiert werden. Die Löcher können dabei kleine Aussparungen sein. In diesem Fall können die Löcher als positive Löcher bezeichnet werden. Es können auch sogenannte negative Löcher vorgesehen werden, bei denen die Löcher kleine, nichttransparente oder nicht-spiegelnde Bereiche sind.

Bei der in Figur 15 gezeigten Ausführungsform erstreckt sich das Lochraster auch in den ersten Flächenbereich 3, so dass sich im ersten Flächenbereich 3 eine Überlagerung der Darstellungen ergibt. Natürlich kann das Sicherheitselement 1 auch so ausgebildet sein, dass im ersten Flächenbereich 3 kein Lochraster vorhanden ist.

Ferner kann bei dem erfindungsgemäßen Sicherheitselement 1 die mikrooptische Darstellungsanordnung 26 mittels diffraktiver Strukturen verwirklicht werden. So kann beispielsweise ein Hologramm mit einer stereographischen 3D-Darstellung vorgesehen werden, das aus mikroskopisch kleinen Sinusgittern aufgebaut ist.

Alternativ kann das mittels der mikrooptischen Darstellungsanordnung 26 dargestellte Objekt auch scheinbar vor dem Sicherheitselement 1 liegen bzw. schweben.

Die mikrooptische Darstellungsanordnung 26 und/oder die Facetten 6 können/kann ganz oder teilweise mit einer farbkippenden Beschichtung, insbesondere einem Dünnfilm mit Reflektor/Dielektrikum/Absorber versehen sein. Damit lässt sich die optische Attraktivität weiter steigern und die Fälschungssicherheit weiter erhöhen.

Bei den bisher beschriebenen Ausführungsbeispielen war die mikrooptische Darstellungsanordnung 26 im zweiten Flächenbereich 4 jeweils so ausgebildet, dass eine stereographische Darstellung mit Tiefeninformationen erreicht wird. Darunter werden hier Darstellungen verstanden, bei denen ein dreidimensionaler Effekt dadurch generiert wird, dass das Sicherheitselement 1 dem linken und rechten Auge des Betrachters unterschiedliche Ansichten eines Objektes liefert, die das Objekt jeweils aus der entsprechenden Richtung betrachtet zeigen. Aus diesen unterschiedlichen Ansichten ergibt sich für einen Betrachter dann eine absolute Tiefeninformation, woraus sich insgesamt ein dreidimensionaler Eindruck ergibt. Die verwendeten Darstellungen in dieser Klasse können oft mehr als nur zwei unterschiedliche Ansichten aufweisen, womit sich meist auch eine Parallaxe ergibt (d.h. beim Drehen bewegen sich die Bildbestandteile im Vordergrund relativ zu den Bildbestandteilen im Bildhintergrund). Unter Umständen kann man beispielsweise durch Drehen auch hinter ein im Vordergrund stehendes Objekt schauen.

Technisch realisiert werden kann dies durch dreidimensionale Hologramme, beispielsweise direkt belichtete Hologramme oder computergenerierte Stereogramme. Weitere Beispiele sind Mikrolinsen-Kippbilder und Moire-Vergrößerungsanordnungen mit Tiefeneffekt oder Bewegungseffekt, wie dies z.B. in WO 2007/076952 A2 oder WO 2009/000527 A1 beschrieben ist.

Man kann nun in einer weiteren Ausgestaltung die mikrooptische Darstellungsanordnung 26 so ausbilden, dass die Parallaxe nicht exakt der Parallaxe eines in der Tiefe liegenden Objektes entspricht. Dies kann beispielsweise durch Moiré-Vergrößerungsanordnungen oder Modulo-Vergrößerungsanordnungen verwirklicht werden. Dadurch kann erreicht werden, dass beim Kippen oder Drehen des Sicherheitselementes 1 ein zusätzlicher Bewegungseffekt im zweiten Flächenbereich 4 auftritt. Dabei kann es sich um eine orthoparallaktische Bewegung handeln, wie sie z. B. in der WO 2007/076952 A2 beschrieben ist, wobei die Darstellungen für das linke und rechte Auge des Betrachters streng genommen keine Zuordnung einer Tiefe zulassen, da sich die Blickrichtungen, unter dem der Beobachter das Objekt mit dem linken und rechten Auge sieht, nicht schneiden. In einer bevorzugten Variante liegt nur ein relativ kleiner Fehler der Parallaxe vor, so dass sich die Blickrichtungen (29 und 30 in Fig. 12) fast schneiden und der Betrachter ein sich beim Kippen oder Drehen des Sicherheitselementes 1 bewegendes Objekt sieht, das er aber trotz des Parallaxenfehlers eindeutig z. B. in einer hinter der Ebene des Sicherheitselementes 1 liegenden Tiefe einordnet.

Im A-Matrix-Formalismus der Anmeldung WO 2009/000528 A1 entspricht eine Darstellung mit korrekter Parallaxe einer Darstellung mit einer A-Matrix, die nur auf der Diagonalen besetzt ist. Bei einer orthoparallaktischen Darstellung ist die A-Matrix nur an den nicht auf der Diagonalen liegenden Stellen besetzt. Ein kleiner Fehler der Parallaxe liegt dann vor, wenn die A-Matrix sowohl auf der Diagonalen als auch daneben besetzt ist.

In einer weiteren Ausgestaltung des Sicherheitselementes 1 kann die Darstellung mittels der mikrooptischen Darstellungsanordnung 26 bei einem Kippen oder Drehen des Sicherheitselementes 1 von einem ersten Bild in ein zweites Bild wechseln. So könnte beispielsweise ein in der Tiefe liegendes Bild eines ersten Symbols A beim Kippen des Sicherheitselementes 1 in mindestens eine andere Darstellung, beispielsweise ein Symbol B, kippen.

Die mikrooptische Darstellungsanordnung 26 kann neben einem dreidimensionalen Effekt auch zusätzliche Effekte realisieren, beispielsweise Kippbilder oder kinematische Effekte (Bewegungen, Pumpeffekt, etc.). Bei den bereits erwähnten Modulo-Vergrößerungsanordnungen kann sich die dreidimensionale Darstellung im zweiten Flächenbereich 4 beim Kippen des Sicherheitselementes 1 bewegen. Alternativ könnte die Darstellung auch ab einem bestimmten Kippwinkel in die Darstellung eines völlig anderen, nicht zwangsweise ebenfalls dreidimensional erscheinenden Objektes kippen (beispielsweise kann eine in der Tiefe liegende Zahl in eine andere Darstellung, beispielsweise ein sich beim weiteren Kippen dann bewegendes Symbol, wechseln).

Besonders vorteilhaft ist bei den Ausführungen, bei denen die mikrooptische Darstellungsanordnung 26 und die Facetten 6 in dieselbe Prägelackschicht 22 (Figuren 11 und 14) geprägt werden, dass man eine mikrooptische Darstellungsanordnung 26 mit äußerst geringem Aufwand zu dem erfindungsgemäßen Sicherheitselement 1 aufwerten kann. Man muss lediglich bei der Origination die Facetten 6 zusätzlich zwischen oder neben den Mikrolinsen 25 oder Mikrohohlspiegeln 32 schreiben.

Das erfindungsgemäße Sicherheitselement 1 kann auch als optisch variables Flächenmuster bezeichnet und z. B. zu rein dekorativen Zwecken eingesetzt werden.

In Figur 16 ist schematisch ein Prägewerkzeug 36 gezeigt, mit dem die Facetten 6 sowie die Mikrolinsen 25 in der oberen Prägelackschicht 22 des Sicherheitselementes 1 gemäß Fig. 11 geprägt werden können. Dazu weist das Prägewerkzeug 36 eine Prägefläche 37 auf, in der die invertierte Form der zu prägenden Oberflächenstruktur ausgebildet ist.

Natürlich kann nicht nur für die Ausführungsform gemäß Figur 11 ein entsprechendes Prägewerkzeug bereitgestellt werden. Auch für die anderen beschriebenen Ausführungsformen kann in gleicher Art ein Prägewerkzeug zur Verfügung gestellt werden.

### Bezugszeichenliste

| | | | |
|---|---|---|---|
| 1 | Sicherheitselement | P3 | Richtung |
| 2 | Banknote | L | einfallendes Licht |
| 3 | erster Flächenbereich | R | Einfallsrichtung |
| 4 | zweiter Flächenbereich | 21 | Trägerfolie |
| 5 | Pixel | 22 | obere Prägelackschicht |
| 6 | Facette | 23 | untere Prägelackschicht |
| 7 | Linie | 24 | Mikrostrukturen |
| 8 | Oberseite | 25 | Mikrolinsen |
| 9 | Träger | 26 | mikrooptische Darstellungsanordnung |
| 10 | Linie | 27 | Position |
| 11 | Linie | 28 | Position |
| 12 | reflektierende Beschichtung | 29 | Betrachtungsrichtung |
| 13 | dielektrische Schicht | 30 | Betrachtungsrichtung |
| 14 | obere Metallschicht | 31 | Position |
| 15 | erste Schicht | 32 | Hohlspiegel |
| 16 | zweite Schicht | 33 | Prägelackschicht |
| 17 | dritte Schicht | 34 | zweite Trägerfolie |
| 18 | Dünnfilmsystem | 35 | Lochraster |
| 19 | Sicherheitsfaden | 36 | Prägewerkzeug |
| 20 | Streifen | 37 | Prägefläche |
| d | Gitterperiode | RA | rechtes Auge |
| α | Neigung | LA | linkes Auge |
| Φ | Azimut-Winkel | | |
| P1 | Richtung | | |
| P2 | Richtung | | |

## Patentansprüche

1. Sicherheitselement (1) für ein Sicherheitspapier, Wertdokument oder dergleichen, mit
einem Träger (9), der einen reflektiven Flächenbereich (3) aufweist, der in eine Vielzahl von reflektiven Pixeln (5) aufgeteilt ist,
wobei die Fläche jedes Pixels (5) um zumindest eine Größenordnung kleiner ist als die Fläche des reflektiven Flächenbereiches (3),
wobei jedes Pixel (5) zumindest eine reflektive Facette (6) aufweist, die in einer Oberfläche des Trägers (9) ausgebildet ist,
wobei die zumindest eine reflektive Facette (6) auf den Flächenbereich entlang einer vorbestimmten Richtung einfallendes Licht gerichtet in eine durch ihre Orientierung vorgegebene Reflexionsrichtung reflektiert, so dass das Sicherheitselement (1) für einen Betrachter des Sicherheitselements einen Bewegungseffekt zeigt,
wobei die Orientierungen der Facetten (6) unterschiedlicher Pixel (5) über den reflektiven Flächenbereich eine im Wesentlichen zufällige Variation um bereichsweise vorgegebene unterschiedliche mittlere Orientierungen aufweisen, die einer zufälligen Variation der Reflexionsrichtungen magnetisch orientierter Pigmente entspricht, so dass das Sicherheitselement (1) einen mit magnetisch orientierten Pigmenten erzielbaren optischen Bewegungseffekt nachstellt, und
wobei die Facetten (6) als gekrümmte Flächenstücke ausgebildet sind.

2. Sicherheitselement (1) nach Anspruch 1, bei dem die Facetten (6) als konkav gekrümmte, konvex gekrümmte oder gewellte Flächenstücke ausgebildet sind.

3. Sicherheitselement (1) nach Anspruch 1 oder 2, bei dem die Facetten (6) einen nicht geradlinigen, insbesondere gekrümmten Verlauf aufweisen.

4. Sicherheitselement (1) nach einem der obigen Ansprüche, bei dem mehrere der Pixel (5) jeweils mehrere reflektive Facetten (6) gleicher Orientierung aufweisen, die ein periodisches oder aperiodisches Sägezahngitter bilden.

5. Sicherheitselement (1) nach einem der obigen Ansprüche, bei dem, wenn mehrere Facetten (6) pro Pixel (5) vorgesehen sind, die ein periodisches oder aperiodisches Sägezahngitter bilden, die Breite der Sägezähne zwischen etwa 1 µm und etwa 300 µm, bevorzugt zwischen etwa 3 µm und etwa 100 µm, besonders bevorzugt zwischen etwa 5 µm und etwa 30 µm liegt.

6. Sicherheitselement (1) nach einem der obigen Ansprüche, bei dem die Pixel (5) auf einem regelmäßigen Raster angeordnet sind.

7. Sicherheitselement (1) nach einem der obigen Ansprüche, bei dem auf den Facetten (6) zumindest bereichsweise eine reflexionserhöhende, insbesondere eine reflektierende Beschichtung (12) ausgebildet ist.

8. Sicherheitselement (1) nach einem der obigen Ansprüche, bei dem auf den Facetten (6) zumindest bereichsweise eine farbkippende Schicht (18) ausgebildet ist, wobei insbesondere bereichsweise unterschiedliche farbkippende Schichten auf den Facetten (6) ausgebildet sind.

9. Sicherheitselement (1) nach Anspruch 8, bei dem die farbkippende Schicht (18) als Dünnfilm-Interferenzbeschichtung, Flüssigkristallschicht, diffraktive Reliefstruktur oder Sub-Wellenlängengitter ausgebildet ist.

10. Sicherheitselement (1) nach einem der obigen Ansprüche, bei dem die maximale Ausdehnung eines Pixels (5) zwischen 5 µm und 5 mm, bevorzugt zwischen 10 µm und 300 µm, besonders bevorzugt zwischen 20 µm und 100 µm liegt.

11. Sicherheitselement (1) nach einem der obigen Ansprüche, bei dem der reflektive Flächenbereich in zumindest zwei Abschnitte aufgeteilt ist, die durch unterschiedliche mittlere Orientierungen vorgegebene unterschiedliche mittlere Reflexionsrichtungen der Pixel (5) aufweisen.

12. Sicherheitselement (1) nach Anspruch 11, bei dem die zumindest zwei Abschnitte mit unterschiedlichen mittleren Reflexionsrichtungen auf verschiedene, ineinander verschachtelte Teilflächen verteilt sind.

13. Sicherheitselement (1) nach einem der obigen Ansprüche, bei dem die Orientierung der Facetten (6) derart gewählt ist, dass der reflektive Flächenbereich (3) einen kontinuierlichen Verlauf der mittleren Reflexionsrichtungen der Pixel (5) aufweist.

14. Wertdokument (2) mit einem Sicherheitselement (1) nach einem der obigen Ansprüche.

15. Herstellungsverfahren eines Sicherheitselementes (1) für Sicherheitspapiere, Wertdokumente oder dergleichen, bei dem
die Oberfläche eines Trägers (9) in einem Flächenbereich (3) so höhenmoduliert wird, dass der Flächenbereich (3) in eine Vielzahl von Pixeln (5) mit jeweils zumindest einer Facette (6) aufgeteilt wird,
und die Facetten (5) mit einer Beschichtung (12) so versehen werden, dass reflektive Facetten gebildet werden, die auf den Flächenbereich entlang einer vorbestimmten Richtung einfallendes Licht pro Pixel (5) jeweils gerichtet in eine durch ihre Orientierung vorgegebene Reflexionsrichtung reflektieren, wobei die Fläche jedes Pixels (5) um zumindest eine Größenordnung kleiner gewählt wird als die Fläche des Flächenbereiches (3),
wobei die Orientierungen der Facetten (6) so gewählt sind, dass das Sicherheitselement (1) für einen Betrachter des Sicherheitselements (1) einen Bewegungseffekt zeigt,
wobei die Orientierungen der Facetten (6) unterschiedlicher Pixel (5) über den reflektiven Flächenbereich eine im Wesentlichen zufällige Variation um bereichsweise vorgegebene unterschiedliche mittlere Orientierungen aufweisen, die einer zufälligen Variation der Reflexionsrichtungen magnetisch orientierter Pigmente entspricht, so dass das Sicherheitselement (1) einen mit magnetisch orientierten Pigmenten erzielbaren optischen Bewegungseffekt nachstellt, und
wobei die Facetten (6) als gekrümmte Flächenstücke ausgebildet sind.

## Claims

1. Security element (1) for a security paper, value document or the like, comprising a carrier (9) having a reflective surface area (3) that is divided into a plurality of reflective pixels (5), wherein the area of each pixel (5) is smaller by at least one order of magnitude than the area of the reflective surface area (3), wherein each pixel (5) has at least one reflective facet (6) formed in a surface of the carrier (9), wherein the at least one reflective facet (6) reflects light incident on the surface area along a predetermined direction in a directed manner into a reflection direction predefined by its orientation, so that the security element (1) exhibits a movement effect for a viewer of the security element, wherein the orientations of the facets (6) of different pixels (5) across the reflective surface area have a substantially random variation about area-wise predefined different mean orientations that corresponds to a random variation of the reflection directions of magnetically oriented pigments, so that the security element (1) simulates an optical movement effect achievable with magnetically oriented pigments, and wherein the facets (6) are formed as curved surface portions.

2. Security element (1) according to claim 1, in which the facets (6) are formed as concavely curved, convexly curved, or undulated surface portions.

3. Security element (1) according to claim 1 or 2, in which the facets (6) have a non-rectilinear, in particular curved, course.

4. Security element (1) according to any of the above claims, in which a plurality of the pixels (5) each have several reflective facets (6) of the same orientation, which form a periodic or aperiodic sawtooth grating.

5. Security element (1) according to any of the above claims, in which, when several facets (6) per pixel (5) are provided that form a periodic or aperiodic sawtooth grating, the width of the sawtooth teeth is between approximately 1 µm and approximately 300 µm, preferably between approximately 3 µm and approximately 100 µm, particularly preferably between approximately 5 µm and approximately 30 µm.

6. Security element (1) according to any of the above claims, in which the pixels (5) are arranged on a regular grid.

7. Security element (1) according to any of the above claims, in which a reflection-enhancing, in particular a reflective, coating (12) is formed on the facets (6) at least in certain areas.

8. Security element (1) according to any of the above claims, in which a color-shifting layer (18) is formed on the facets (6) at least in certain areas, wherein in particular different color-shifting layers are formed on the facets (6) in certain areas.

9. Security element (1) according to claim 8, in which the color-shifting layer (18) is formed as a thin-film interference coating, liquid crystal layer, diffractive relief structure, or sub-wavelength grating.

10. Security element (1) according to any of the above claims, in which the maximum extent of a pixel (5) is between 5 µm and 5 mm, preferably between 10 µm and 300 µm, particularly preferably between 20 µm and 100 µm.

11. Security element (1) according to any of the above claims, in which the reflective surface area is divided into at least two sections that have different mean reflection directions of the pixels (5) predefined by different mean orientations.

12. Security element (1) according to claim 11, in which the at least two sections with different mean reflection directions are distributed over different, mutually interleaved partial surfaces.

13. Security element (1) according to any of the above claims, in which the orientation of the facets (6) is selected such that the reflective surface area (3) has a continuous course of the mean reflection directions of the pixels (5).

14. Value document (2) comprising a security element (1) according to any of the above claims.

15. Manufacturing method of a security element (1) for security papers, value documents or the like, in which the surface of a carrier (9) is height-modulated in a surface area (3) such that the surface area (3) is divided into a plurality of pixels (5) each having at least one facet (6), and the facets (5) are provided with a coating (12) such that reflective facets are formed that reflect light incident on the surface area along a predetermined direction per pixel (5) each in a directed manner into a reflection direction predefined by their orientation, wherein the area of each pixel (5) is chosen to be smaller by at least one order of magnitude than the area of the surface area (3), wherein the orientations of the facets (6) are chosen such that the security element (1) exhibits a movement effect for a viewer of the security element (1), wherein the orientations of the facets (6) of different pixels (5) across the reflective surface area have a substantially random variation about area-wise predefined different mean orientations that corresponds to a random variation of the reflection directions of magnetically oriented pigments, so that the security element (1) simulates an optical movement effect achievable with magnetically oriented pigments, and wherein the facets (6) are formed as curved surface portions.

## Revendications

1. Élément de sécurité (1) pour un papier de sécurité, un document de valeur ou similaire, comprenant un support (9) qui présente une zone de surface réfléchissante (3) divisée en une pluralité de pixels réfléchissants (5), la surface de chaque pixel (5) étant inférieure d'au moins un ordre de grandeur à la surface de la zone de surface réfléchissante (3), chaque pixel (5) présentant au moins une facette réfléchissante (6) formée dans une surface du support (9), ladite au moins une facette réfléchissante (6) réfléchissant de manière dirigée la lumière incidente sur la zone de surface selon une direction prédéterminée dans une direction de réflexion déterminée par son orientation, de sorte que l'élément de sécurité (1) présente un effet de mouvement pour un observateur de l'élément de sécurité, les orientations des facettes (6) de différents pixels (5) présentant sur la zone de surface réfléchissante une variation essentiellement aléatoire autour d'orientations moyennes différentes prédéfinies par zone, correspondant à une variation aléatoire des directions de réflexion de pigments orientés magnétiquement, de sorte que l'élément de sécurité (1) simule un effet de mouvement optique réalisable avec des pigments orientés magnétiquement, et les facettes (6) étant formées en tant que morceaux de surface courbés.

2. Élément de sécurité (1) selon la revendication 1, dans lequel les facettes (6) sont formées en tant que morceaux de surface courbés de manière concave, courbés de manière convexe ou ondulés.

3. Élément de sécurité (1) selon la revendication 1 ou 2, dans lequel les facettes (6) présentent un tracé non rectiligne, notamment courbé.

4. Élément de sécurité (1) selon l'une des revendications précédentes, dans lequel plusieurs des pixels (5) présentent chacun plusieurs facettes réfléchissantes (6) de même orientation qui forment un réseau en dents de scie périodique ou apériodique.

5. Élément de sécurité (1) selon l'une des revendications précédentes, dans lequel, lorsque plusieurs facettes (6) par pixel (5) sont prévues et forment un réseau en dents de scie périodique ou apériodique, la largeur des dents de scie est comprise entre environ 1 µm et environ 300 µm, de préférence entre environ 3 µm et environ 100 µm, de manière particulièrement préférée entre environ 5 µm et environ 30 µm.

6. Élément de sécurité (1) selon l'une des revendications précédentes, dans lequel les pixels (5) sont disposés sur une grille régulière.

7. Élément de sécurité (1) selon l'une des revendications précédentes, dans lequel un revêtement augmentant la réflexion (12), notamment un revêtement réfléchissant, est formé sur les facettes (6) au moins par zones.

8. Élément de sécurité (1) selon l'une des revendications précédentes, dans lequel une couche à changement de couleur (18) est formée sur les facettes (6) au moins par zones, des couches à changement de couleur différentes étant notamment formées par zones sur les facettes (6).

9. Élément de sécurité (1) selon la revendication 8, dans lequel la couche à changement de couleur (18) est formée en tant que revêtement à interférence en couche mince, couche de cristaux liquides, structure de relief diffractive ou réseau sub-longueur d'onde.

10. Élément de sécurité (1) selon l'une des revendications précédentes, dans lequel l'extension maximale d'un pixel (5) est comprise entre 5 µm et 5 mm, de préférence entre 10 µm et 300 µm, de manière particulièrement préférée entre 20 µm et 100 µm.

11. Élément de sécurité (1) selon l'une des revendications précédentes, dans lequel la zone de surface réfléchissante est divisée en au moins deux sections présentant des directions de réflexion moyennes différentes des pixels (5) prédéfinies par des orientations moyennes différentes.

12. Élément de sécurité (1) selon la revendication 11, dans lequel les au moins deux sections présentant des directions de réflexion moyennes différentes sont réparties sur différentes surfaces partielles imbriquées les unes dans les autres.

13. Élément de sécurité (1) selon l'une des revendications précédentes, dans lequel l'orientation des facettes (6) est choisie de telle sorte que la zone de surface réfléchissante (3) présente un tracé continu des directions de réflexion moyennes des pixels (5).

14. Document de valeur (2) comprenant un élément de sécurité (1) selon l'une des revendications précédentes.

15. Procédé de fabrication d'un élément de sécurité (1) pour des papiers de sécurité, des documents de valeur ou similaires, dans lequel la surface d'un support (9) est modulée en hauteur dans une zone de surface (3) de telle sorte que la zone de surface (3) est divisée en une pluralité de pixels (5) présentant chacun au moins une facette (6), et les facettes (5) sont pourvues d'un revêtement (12) de telle manière que des facettes réfléchissantes sont formées, lesquelles réfléchissent de manière dirigée, pour chaque pixel (5), la lumière incidente sur la zone de surface selon une direction prédéterminée dans une direction de réflexion déterminée par leur orientation, la surface de chaque pixel (5) étant choisie inférieure d'au moins un ordre de grandeur à la surface de la zone de surface (3), les orientations des facettes (6) étant choisies de sorte que l'élément de sécurité (1) présente un effet de mouvement pour un observateur de l'élément de sécurité (1), les orientations des facettes (6) de différents pixels (5) présentant sur la zone de surface réfléchissante une variation essentiellement aléatoire autour d'orientations moyennes différentes prédéfinies par zone, correspondant à une variation aléatoire des directions de réflexion de pigments orientés magnétiquement, de sorte que l'élément de sécurité (1) simule un effet de mouvement optique réalisable avec des pigments orientés magnétiquement, et les facettes (6) étant formées en tant que morceaux de surface courbés.
